# EUROPEAN PATENT SPECIFICATION

(11) **EP 2 911 531 B1**
(45) Date of publication and mention of the grant of the patent: **22.08.2018**
(21) Application number: 13849210.3
(22) Date of filing: 17.10.2013
(51) Int. Cl.: A23L 13/60, A23L 3/01, A23L 3/40, A23B 4/03

(54) **RAPID PARTIAL DRYING OF SAUSAGE LOGS**
PARTIELLE SCHNELLE TROCKNUNG VON WURSTROLLEN
SÉCHAGE PARTIEL RAPIDE DE MORCEAUX DE SAUCISSE

(30) Priority: 24.10.2012 US 201261718060 P
(43) Date of publication of application: 02.09.2015
(73) Proprietor: Smithfield Foods Inc., Smithfield VA 23430 (US)
(72) Inventor: KAFER, Paul, Carrollton, VA 23314-2695 (US); TAYLOR, Dave, Smithfield, VA 23430-3346 (US); ROBERDS, James, Holt, MO 64048-8419 (US)
(74) Representative: Vossius & Partner Patentanwälte Rechtsanwälte mbB
(86) International application number: PCT/US2013/065435
(87) International publication number: WO 2014/066133

(56) References cited:
- EP-A1- 2 850 948
- WO-A1-89/00393
- GB-A- 2 039 710
- SU-A1- 1 099 935
- US-A- 2 346 232
- US-A- 3 664 850
- US-A- 3 746 012
- US-A- 4 013 797
- US-A- 5 942 265
- US-A- 5 942 265
- US-A1- 2006 196 334
- US-A1- 2007 065 551
- US-A1- 2007 248 743
- US-A1- 2007 248 743
- US-A1- 2009 092 708
- US-A1- 2012 282 372
- US-B2- 6 524 633

## Description

### BACKGROUND OF THE INVENTION

### Field of the Invention

The present invention is defined by the claims and relates generally to a method for preparing a dry or semi-dry sausage product comprising heat treating sausage in casings or moulds (logs), followed by partial drying using conditioned air and microwaves, and then drying in a drying chamber.

### Description of the Related Art

Different processes have been used to manufacture cured, smoked, dried, and semi-dried sausages, including processes for preparing dry sausage (*e.g.,* pepperoni, Genoa salami). In these processes, the initial meat mixture is cured and thereafter dried or heated in air, sunlight, drying rooms, or smokehouses. *See* FAO Corporate Document Repository (2010) "Meat Drying". The cure and drying process may last for days or even weeks. A wide variety of final products and inconsistent qualities results from the use of well-established recipes and techniques.

Dry sausage is typically prepared by stuffing the desired meat mixture into fibrous casings and curing the resultant product for extended periods (*e.g.,* over 7 days). This particular sausage is most commonly served in thin slices, with or without the casing (the casing being removed after heat treating). Sliced dry sausage are used in a variety of food applications, such as toppings, sandwiches, salad bars, and are often used in making pizzas (*e.g.,* pepperoni pizzas).

The typical current practice is to prepare the dry sausage using conventional processes employing blending, stuffing the meat mixture into casings or moulds, or extruding into moulds, heat treating or cooking a meat mixture, and curing, following which the product is thinly sliced. The slices may then be used by consumers or by foodservice operators (*e.g.,* toppings, sandwiches, salad bars, and pizzas). Because the drying and curing process requires from several days to several weeks, production capacity for a manufacturing facility is limited to the amount of space allocated to the drying process. This process is capital intensive, and requires a tremendous amount of product to be held in process at any given period of time. Again, the preparation process of dry sausage (*e.g.,* pepperoni) may take days or weeks. Several patents describe methods for curing or drying dry sausage products.

U.S. Patent No. 2,346,232 describes the preparation of semi-dried meat for food ration purposes by exposing the meat mixture to a turbulent air flow to reduce the moisture content from an original range of 45 to 85% to a range of 20 to 55%. The air used in this process was at a temperature of 0°C to 30°C (32°F to 86°F) and the air is moved across the meat surface at a velocity of 0.30 to 5.49 m/second (1 to 18 feet/second). The meat products discussed in U.S. Patent No. 2,346,232 are produced in 0.64 to 3.18 cm (1/4 to 1-1/4 inch) thick layers or in ropes of 0.95 cm (3/8-inch) diameter for drying. For 0.95 cm (3/8-inch) ropes, drying reduces the moisture to 28% in 8 to 13 hours, while the 3.18 cm (1-1/4-inch) layers require 13 days. The benefits of turbulent flow are alleged to be increased by 40% early in the process where the air contacts a moist surface, however, the effect of the turbulent air flow of this patent is substantially reduced as the drying continues. For example, in one test reported in U.S. Patent No. 2,346,232, drying of 0.95 cm (3/8-inch) ropes from 55% to 40% moisture took just three hours, while a further reduction to 28% required an additional five hours. U.S. Patent No. 2,346,232 does not disclose any direct relationship between the humidity of the air used in the process and the time of drying. Further, the product is held in flat trays in the examples.

Another process for preparing sausages is disclosed in U.S. Patent No. 3,482,996 where the meat compositions include dehydrated, spun, edible protein fibers or dehydrated fibrous products derived from spun, edible protein fibers. The fibers allegedly take up the moisture which is removed in a drying room. U.S. Patent No. 3,482,996, however, does not disclose the use of an air flow to dry sausage products.

U.S. Patent No. 4,265,918 describes a technique that includes immersion of a meat product in a curing solution, followed by vacuum dehydration. The initial hydration step is to about 105 to 125% of the product's original weight, followed by vacuum treatment to reduce the overall product weight to 70 to 95% of its original weight. U.S. Patent No. 4,265,918 does not disclose the use of air flow to dry sausage products.

Yet another process is described in U.S. Patent No. 4,279,935 where bactericides and bacteriostats are first added to a meat, followed by treatment with an acidic mixture to reduce the pH to about 5.7. The sausage is then heated to 14.44°C (58°F) and dried to reduce the average moisture level to 35%. U.S. Patent No. 4,279,935 discloses a drying time of 5 to 20 days and does not disclose the use of air flow to dry sausage products.

Further a process described in WO 2005/092109 uses vacuum-drying methods for drying meat products. However, this publication does not contemplate the use of air flow to dry sausage products; in fact, it uses low air pressure.

Additionally, these current processes require the dry sausage to be held in its casing during the curing and drying phase, thereby reducing the rate at which moisture may be removed from the product and adding to manufacturing cost. Holding the dry sausage in its casing during drying also disallows the ability to slice the product prior to drying, which would increase the surface area of the product and aid in moisture removal.

Further, under the current process, sausage mix products are thermally treated in a chamber. This product is transferred to a drying chamber. Dry sausage products need to meet specific criteria of Moisture to Protein ratio by category (*e.g.,* pepperoni, salami). The time it takes for product to dry is a function of the length, diameter, starting moisture, environmental conditions in the chamber and target Moisture to Protein ratio. Typically, a product will dry in about 28 days. For the longer drying time products, significant space is needed, and working capital values increase. These are detrimental to costs of production.

Accordingly, there exists a need for a method of manufacturing dry sausage that may address or even overcome one or more of the foregoing disadvantages. Further, there exists a need for improving the quality and the manufacturing processes of dry sausages.

### BRIEF SUMMARY OF THE INVENTION

The present disclosure as characterized by the appended claims provides a number of new and useful advances that may be used together or separately.

The disclosure generally provides for the use of microwave energy to rapidly partially dry sausage logs.

In more detail ,the present invention relates to a method for preparing dry sausage comprising: (a) preparing a dry sausage meat mixture; (b) stuffing the mixture into a casing or mould, or extruding into moulds, to form a sausage log; (c) fermenting the unsliced sausage log; (d) heat treating the unsliced sausage log; followed by (e) placing the sausage log onto a conveyor; (f) passing the conveyor with the unsliced sausage log thereon through a chamber; (g) introducing into the chamber a supply of conditioned air having a relative humidity below 60% and a temperature in the range of 4.44°C to 54.44°C (40°F to 130°F); (h) introducing a supply of microwaves into the chamber, wherein the sausage log remains in the chamber for 1-12 hours, wherein the supply of conditioned air and the supply of microwaves are selected to reduce the moisture content of the unsliced sausage log to a predetermined moisture to protein ratio; and (i) drying the sausage log in a drying chamber for 1-18 days, wherein the conditions are selected to reduce the moisture content of the unsliced sausage log to a predetermined moisture to protein ratio.

The present invention also relates to a method for preparing dry sausage may comprise: (a) preparing a dry sausage meat mixture; (b) stuffing the mixture into a casing or mould, or extruding into moulds, to form a sausage log; (c) fermenting the unsliced sausage log; (d) heat treating the unsliced sausage log; followed by (e') drying the sausage log in a drying chamber for 1-18 days, wherein the conditions are selected to reduce the moisture content of the sausage log to a predetermined moisture to protein ratio; (f') placing the unsliced sausage log onto a conveyor; (g') passing the conveyor with the unsliced sausage log thereon through a chamber; (h') introducing into the chamber a supply of conditioned air having a relative humidity below 60% and a temperature in the range of 4.44°C to 54.44°C (40°F to 130°F); and (i') introducing a supply of microwaves into the chamber, wherein the sausage log remains in the chamber for 1-12 hours, wherein the supply of conditioned air and the supply of microwaves are selected to reduce the moisture content of the sausage log to a predetermined moisture to protein ratio.

In one embodiment, preparing a dry sausage meat mixture comprises blending, grinding and blending for a second time the dry sausage meat mixture.

Fermentation of the sausage log may be at a temperature of about -0.56-45.00°C (31-113°F) or about 37.78°C(100°F).

Heat treating the sausage log may be at a temperature of about 53.33°C (128°F) for about 1 hour.

In one embodiment, drying the sausage log is under conditions of a temperature of 12.78-18.33°C (55-65°F), 65-75% relative humidity, and 9.14cm (0.3 feet)/second air velocity performed in a drying chamber.

The method may further comprise cutting the sausage log. The step of cutting the sausage log may comprise slicing the sausage log. The sausage log may be sliced into slices having a thickness of about 4 mm or less, optionally about 1-4 mm or about 3 mm. The step of cutting the sausage log may comprise dicing the sausage log. The step of cutting the sausage log may comprise cubing the sausage log.

The temperature of the chamber may be in the range of about 7.22°C (50°F) to about 48.89°C (120°F). The temperature in the chamber may also be in the range of about 4.44°C (40°F) to about 37.78°C (100°F).

In one embodiment, the conditioned air is passed through the chamber at a volume sufficient to cause a linear air flow velocity over the sausage log to be at least 30.48 m (100 feet) per minute. The linear air flow velocity may be 30.48 m (100 feet) per minute to 609.60 m (2,000 feet) per minute. In another embodiment, the conditioned air is introduced into the chamber from above and below the sausage log. In another embodiment, the conditioned air is supplied as a turbulent air flow. In another embodiment, the conditioned air has a relative humidity of below 50-55%. The conditioned air may have a relative humidity of below about 25%.

In one embodiment, the method further comprises cooling the sausage log after it leaves the microwave dryer. In one embodiment, said method further comprises cooling the sausage log, optionally to a temperature of about -17.78-1.67°C (0-35°F).

In one embodiment, the method comprises introducing the microwaves in pulses. In one embodiment, the pulses comprise a repeating on/off cycle of 2 to 30 seconds on, and 2 to 30 seconds off. In another embodiment, the pulses comprise a repeating on/off cycle of 10 seconds on and 7 seconds off. In another embodiment, the pulses comprise a repeating on/off cycle of 12 seconds on and 12 seconds off.

In one embodiment, the microwaves are provided at 2 to 20 kilowatts. The microwaves may also be provided at about 8-12 kilowatts. The microwaves may be provided at about 20 kilowatts.

In accordance with the present invention, the unsliced sausage log remains in the chamber for 1-12 hours, optionally 1, 2, 3, 4, 5, 6, 7, 8, 9, 10, 11, or 12 hours.

The sausage log may be pepperoni, chorizo, or salami.

The method may further comprise monitoring the sausage log using at least one of a thermal imaging device, a vision system, an inline checkweigher, near infrared (NIR) imaging system, or an infrared sensor at least one location. The method may further comprise weighing the sausage log before it enters the chamber and weighing the sausage after it exits the chamber and calculating the reduction in weight of the sausage log.

The sausage log may be dried in step (i) until a moisture to protein ratio of the sausage log is reduced to about 2.3:1 or less. The sausage log may be dried in step (e) until a moisture to protein ratio of the sausage is reduced to about 2.3:1 or less. The sausage log may be dried until the moisture to protein ratio is reduced to about 1.6:1 or less.

The sausage log may be dried in step (h') until a moisture to protein ratio of the sausage is reduced to about 2.3:1 or less. The sausage log may be dried in step (i') until a moisture to protein ratio of the sausage is reduced to about 2.3:1 or less. The sausage log may be dried until the moisture to protein ratio is reduced to about 1.6:1 or less.

The air pressure in the chamber may be at least about one atmosphere.

In another embodiment, the chambercomprises a plurality of cavities extending along the conveyor. The conditioned air and the microwaves may be provided in the same one of the plurality of cavities. The conditioned air and the microwaves may be provided in different ones of the plurality of cavities. The microwaves may be provided in a first one of the plurality of cavities, and the conditioned air is provided in a second one of the plurality of cavities, the second one being downstream of the first one with respect to a direction of movement of the sausage pieces or logs. The no microwaves may be provided in the second one of the plurality of cavities.

The drying step (i) may be conducted for about 1-7 days, optionally about 7 days or about 6 days. The drying step (i) may be conducted at about 37.78°C (100°F) temperature. The drying step (i) may be conducted at about ≤5% humidity.

In one embodiment, the sausage log is 40-90 mm or 40-115 mm in diameter. In another embodiment, the sausage log is 91-182 cm in length.

The method may further comprise removing the outer casing after heat treatment of the sausage log. The outer casing may be removed prior to drying in the microwave oven dryer.

Also described herein is a method for preparing dry sausage logs. Also described herein is an apparatus for preparing dry sausage logs. Also described herein is a cured dry sausage product which flows easily and which may be evenly spread on other food items (*e.g.,* pizza.) Also described herein is a cured dry sausage product for use in sandwiches, retail dry sausage deli packaging, sliced cured dry sausage products (*e.g.,* bags of sliced dry sausage), or inclusion in food items (*e.g.,* soups, calzones, HOT POCKETS®).

Also described herein is that the method may employ a microwave drying system for drying sausage logs, which may be prepared for drying by blending uncooked (and/or non-heat treated) meat products and spices and heat treating the meat mixture and stuffing it into casings or moulds or extruding into moulds. The sausage logs may then be dehydrated by using a combination conditioned air and microwaves. The temperature and humidity of the air flow within a microwave system used to dry the sausage may be controlled. For example, the microwave system may be coupled to sensors (*e.g.,* infrared sensors), thermal imaging devices, vision systems, near infrared (NIR) imaging systems, in-line checkweighers, or feedback control system. The partially dried sausage logs may then be dried in a drying room until they reach a desired moisture-to-protein ratio.

A method for preparing heat treated and/or cooked dry sausage logs may comprise formulating a meat mixture to the desired specification and initially grinding the meat (*e.g.,* beef and/or pork) to a size no greater than about 1.27 cm (one half (1/2) inch). The meat may be then added to a blender and mixed with salt, culture, water and spices, oleoresins, and dextrose, optionally adding a cure (*e.g.,* a source of nitrite, salt, and sugar). For example, the meat may be admixed with a cure (*e.g.,* a source of nitrite, salt, and sugar), smoke (*e.g.,* liquid smoke), culture, water, oleoresins, and spices. Blending may be carried out for about 5 minutes, after which a second grinding may occur, this time to a size no greater than about 0.48 cm (3/16"). Bone may be eliminated at this stage. The meat mixture may be formed by admixing the meat with salt, culture, water and spices, oleoresins, and dextrose, optionally adding a cure (*e.g.,* a source of nitrite, salt, and sugar) and grinding the meat mixture then blending it in a blender as described herein. Also, the meat mixture may be formed by admixing the meat with salt, culture, water and spices, oleoresins, and dextrose, optionally adding a cure (*e.g.,* a source of nitrite, salt, and sugar), blending the meat mixture, and then grinding a second time. Meat temperature may be maintained below about 40°F in the blending and grinding process. Following the final grinding or blending step, the meat mixture is stuffed into casing or moulds or extruded into moulds and may be transferred to ovens where it may be fermented or heat treated. For example, the meat mixture may be formulated, ground, blended and then stuffed into casings or moulds, or extruded into moulds, and then may be transferred to ovens where it may be fermented or heat treated. Also, the meat mixture may be formulated ground, blended, ground a second time, and then stuffed into casings or moulds, or extruded into moulds, and then may be transferred to ovens where it may be fermented or heat treated.

The heat treated sausage may thereafter be partially dried in a microwave dryer, a plurality of logs may be dried in a microwave dryer at a time. For example, 3, 6, 9, or 12 logs may be arranged and dried at a time. Further, 3, 6, 9, or 12 sausage logs may be arranged and dried at a time. Also, 1, 2, 3, 4, 5, 6, 7, 8, 9, 10, 11, 12, 13, 14, 15, or 16 sausage logs may be arranged and dried together. The dry sausage may be then transferred to the conveyor of a dryer unit where it may be exposed to conditioned air maintained between about 4.44°C and 37.78°C (about 40°F and 100°F) and a relative humidity below about 50% for a time of about 3 to about 15 minutes, or between 4.44°C (40°F) and 54.44°C (130°F) and a relative humidity of below about 60% for a time of about 1 minute to 30 minutes. For example, the conditioned air may be maintained between about 10.00°C (50°F) and 48.87°C (120°F). The relative humidity of the conditioned air may be below about 5, 10, 15, 20, 25, 30, 40, 50, or 60%. For example, the relative humidity of the conditioned air may be about 50-55%. The relative humidity of the conditioned air may be about 25% or below. The drying time may be about 1 to 30 minutes. For example, the drying time may be about 2 to 10 minutes, 2 to 15 minutes, or 15 to 30 minutes. The drying time for the sausage logs may be 1, 2, 3, 4, 5, 6, 7, 8, 9, 10, 11, 12, 13, 14, 15, or 16 hours. The drying time for the sausage logs may be about 12 hours.

Air flow through the dryer may be at least about 2.83 to 84.95 m³ per minute (about 100 to 3,000 cubic feet per minute) at a linear air flow over the dry sausage of about 2.83 to 56.63 m per minute (about 100 to 2,000 feet per minute). The air flow may be at least about 56.63 to 70.79 cm/min (about 2,000 to 2,500 cfm), or at least about 56.63 cm/min (about 2,000 cfm), and at a linear air flow over the dry sausage of about 304.80 m to 457.20 m per minute (m/min) (1,000 to 1,500 feet per minute (ft/min)), or at least about 54.86 to 274.32 m/min (about 180 to 900 ft/min). The linear air flow rate may be at least about 152.40 m/min (about 500 ft/min). Also, the linear flow rate of the air may be at a level where it is just below the point where it moves the product or blows it off the belt. Additionally, the air pressure in the dryer unit may be maintained at about atmospheric pressure (atm) (*e.g.,* about 750 torr or 101 kPa).

The processes and systems may comprise product quality and yield instrumentation to monitor the product quality and yield. A "pre-dried" product checkweigher may check the weight of the sausage log before drying in the dryer unit. A vision/camera system may be used prior to entry of the product in the dryer unit for monitoring the product load. After the product exits the dryer unit, thermal monitoring may be used for monitoring dry sausage product quality. A "post-dried" product checkweigher may be used for yield verification prior the dry sausage product to be conveyed to the freezing unit.

Moisture in the meat product may be reduced to ratio to meet USDA requirements and standard of identity with respect to protein. The initial moisture to protein ration may be about ≥3.0:1. The moisture to protein ratio exiting the drying chamber or microwave dryer may be about ≤3.0:1. For example, the moisture to protein ratio may be at least about 1.6:1, 1.9:1, 2.0:1, 2.03:1, 2.04:1, 2.1:1, 2.25:1, 2.3:1, or 3.1:1 after exiting the drying chamber or microwave dryer. Further, the moisture to protein ratio may be about 2.3:1 to 1.6:1 after exiting the drying chamber or microwave dryer. The moisture to protein ratio may be at least about 1.6:1-2.3:1 after exiting the drying chamber or microwave dryer. It will be understood that the moisture to protein ratio may vary depending on the particular product; for example, a Pepperoni product might have a moisture to protein ratio of 1.6, whereas a Genoa Salami product might have a moisture to protein ratio of 2.3. Also, modifications may be made to the moisture to protein ratio to obtain benefits to the physical (*e.g.,* toughness) or chemical (*e.g.,* taste) properties of the product. The dry sausage may be then conveyed to a chiller, where it may be chilled or frozen for packaging and subsequent transfer to the customer. Further, the moisture to protein ratio may be lower at the end of a process step than the beginning. For example, the moisture to protein ratio may be about ≥3.0:1 after the fermentation step but below about 2.3:1 after the microwave drying step.

Also described herein is the preparation of dry sausage in a relatively small amount of manufacturing space and in a minimal amount of time as compared to prior processes.

The foregoing and other objects are explained in greater detail in reference to the description set forth herein.

### DESCRIPTION OF THE DRAWINGS

**FIGURE 1A** and **1B** depict an exemplary flow-charts of the processes for drying sausage logs.
**FIGURE 1C** depicts a top schematic view of an exemplary set of equipment used to carry out microwave partial drying.
**FIGURE 2** depicts a plan view of the line with exemplary product quality and yield instrumentation, including a "pre-dried" product checkweigher and vision/camera system for monitoring load between the loading conveyor and the dryer unit and a thermal monitoring for product quality and a "post-dried" product checkweigher for yield verification between the dryer unit and the drying chamber.
**FIGURE 3** depicts a schematic illustration of an exemplary dryer unit showing one configuration of air flow and product flow.
**FIGURE 4** depicts a schematic illustration of an exemplary dryer unit configuration comprising three entry points for conditioned dry air from the top of the microwave and air dryer unit, three exhaust points on the side of the dryer unit, and two supply points of microwave energy on the top of the microwave and air dryer unit.
**FIGURE 5** is a schematic view of an exemplary dehumidifier for the supply of dry conditioned air.
**FIGURE 6** depicts exemplary monitoring points for measuring various exemplary properties of air passing through the system.
**FIGURE 7** depicts a top schematic view of an exemplary set of equipment used to carry out dry sausage freezing, slicing, and packaging steps.

### DETAILED DESCRIPTION

The disclosure relates to a method for preparing dry sausage comprising partial drying of logs.

The process comprises preparing a dry sausage meat mixture; stuffing meat mixture into casing or moulds, or extruding into moulds. The meat mixture may be formed into logs. The sausage logs may be about 1.5-3.5 inches (about 40-90 mm) or about 1.5-4.5 inches (about 40-115 mm) in diameter. The sausage logs may be about 36-72 inches (about 91-182 cm) in length. The meat mixture logs may then be fermented at a temperature of at least about 37.8° C (100°F) for 12 hours; heat treating the meat mixture logs at a temperature at least about above 53.3°C (128°F) for an hour to prepare a heat treated sausage log; optionally cooling the heat treated sausage log to a temperature (*e.g.,* about 1.67°C (about 35°F)).

Following fermentation the outer casing is peeled away prior to entry to the microwave dryer and the partially dried sausage logs are placed into a microwave dryer system as described herein. The microwave dryer may be operated at a power level of about 8-20 kW, optionally about 8-12 kW or about 20 kW. The microwave dryer comprises several levels of belts. The microwave drying process described herein begins the drying process. The belts would move at various speeds depending on the product. The total time for completing a drying cycle of the sausage logs may be about 12-24 hours. The microwave oven may comprise several levels of belts, optionally three tiers of belts.

The sausage logs may then be stored for drying in a drying chamber at least about 1-31 days, optionally 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, or 31 days. Drying chamber conditions about 12.78-18.33°C (about 55-65°F) and relative humidity 65-75%. The drying chamber may have an air velocity of about 9.14 cm (about 0.3 feet)/second for air circulation. The sausage logs may be dried for 1, 2, 3, 4, 5, 6, or 7 days. The sausage logs may be dried in the drying chamber for about 7 days. The inventors surprisingly found that this partial drying followed by drying in a drying chamber produces a dried sausage product in less than one a quarter the time than current methods.

After exiting the drying room, logs may be packaged as whole logs, or cut into smaller pieces and packaged. For example, after exiting the drying room, the sausage logs may be sliced or diced. The dried sausage log may, optionally, be cooled to a temperature sufficiently low to permit slicing (*e.g.,* about 1.67°C (about 35°F)).

The method may comprise preparing a dry sausage meat mixture; stuffing meat mixture into casing or moulds, or extruding into moulds, to form a log; fermenting the sausage log at a temperature of at least about 37.78°C (about 100°F) for 12 hours; heat treating the sausage log at a temperature at least about above 53.33°C (128°F) for an hour to prepare a heat treated sausage log; removing the outer casing from the sausage logs; depositing the sausage logs onto the conveyor of a microwave dryer unit; passing conditioned air into and through the microwave dryer unit; and wherein the conditioned air has a relative humidity below 60% (*e.g.,* about 50-55%) and a temperature in the range of 4.44°C to 54.44°C 40°F to 130°F) (*e.g.,* about 10.00°C to 48.89°C (about 50°F to 120°F)) when introduced into the dryer unit; and wherein the sausage logs are processed through the dryer unit for a time sufficient to reduce the moisture to protein ratio to at least about 2.3:1. The moisture to protein ratio maybe at least about 1.6:1, 1.9:1, 2.0:1, 2.03:1, 2.04:1, 2.1:1, 2.25:1, 2.3:1, or 3.1:1. For example, the moisture to protein ratio may be about 2.3:1 or 1.6:1. The microwave dryer may be operated at a power level of about 8-20 kW, optionally about 8-12 kW or about 20 kW. The relative humidity of the conditioned air may be below 5, 10, 15, 20, 25, 30, 40, 50, or 60%. The conditioned air may have a relative humidity below about 50-55%. The conditioned air may have a relative humidity below about 50% or below about 25%. The conditioned air may have a temperature of between about 4.44°C to about 37.78°C (about 40°F and 100°F) or between about 10.00°C to 48.89°C (about 50°F to 120°F). The sausage logs may then be dried for about 1-7 days, optionally 7 days at drying chamber conditions 17.78-18.33°C (55-65°F) and relative humidity 65-75% with an about 9.14 cm (about 0.3 feet) /second air velocity for air circulation. The sausage logs may then be dried in a drying chamber for a time sufficient to reduce the moisture to protein ratio to at least about 2.3:1. The moisture to protein ratio may be at least about 1.6:1, 1.9:1, 2.0:1, 2.03:1, 2.04:1, 2.1:1, 2.25:1, 2.3:1, or 3.1:1. For example, the moisture to protein ratio may be about 2.3:1 or 1.6:1. *See, e.g.,* USDA Requirements and Standard of Identity for dry sausage (MPR) in USDA Food Standards and Labeling Policy Book (2005). After exiting the drying chamber, the sausage logs may be cooled to a temperature sufficiently low to permit slicing, optionally about -17.78°C to 1.67°C (about 0°F to 35°F). The sausage logs may then be cut, optionally sliced or diced.

The method comprises preparing a dry sausage meat mixture; stuffing meat mixture into casing or moulds, or extruding into moulds, to form a log; fermenting the sausage log at a temperature of at least about 37.78°C (about 100°F) for 12 hours; heat treating the sausage log at a temperature at least about above 53.33°C (128°F) for an hour to prepare a heat treated sausage log; depositing the sausage log onto the conveyor of a microwave dryer unit; passing conditioned air into and through the dryer unit; and wherein the conditioned air has a relative humidity below 60% (*e.g.,* about 50-55%) and a temperature in the range of 4.44°C to 54.44°C (40°F to 130°F) (*e.g.,* about 10.00°C to 48.89°C (about 50°F to 120°F)) when introduced into the dryer unit; and wherein the sausage log is processed through the dryer unit for a time sufficient to reduce the moisture to protein ratio to at least about 2.3:1. The sausage log may be dried in the microwave oven/dryer for about 1, 2, 3, 4, 5, 6, 7, 8, 9, 10, 11, 12, 13, 14, 15, or 16 hours. The microwave dryer may be operated at a power level of about 8-20 kW, optionally about 8-12 kW or about 20 kW. The sausage logs may then be dried for about 1-7 days, optionally 7 days at drying chamber conditions 12.78-18.33°C (55-65°F) and relative humidity 65-75% and air circulation at about 9.14cm (0.3 feet)/second air velocity. The relative humidity of the conditioned air may be below about 5, 10, 15, 20, 25, 30, 40, 50, or 60%. The conditioned air may have a relative humidity below about 50-55%. The conditioned air may have a relative humidity below about 50% or below about 25%. The conditioned air may have a temperature of between about 4.44°C to about 37.78°C (about 40°F and 100°F) or between about 10.00°C to 48.89°C (about 50°F to 120°F). The moisture to protein ratio may be at least about 1.6:1, 1.9:1, 2.0:1, 2.03:1, 2.04:1, 2.1:1, 2.25:1, 2.3:1, or 3.1:1. For example, the moisture to protein ratio may be about 2.3:1 or 1.6:1. *See, e.g.,* USDA Requirements and Standard of Identity for dry sausage (MPR) in USDA Food Standards and Labeling Policy Book (2005).

Further, sensors for moisture content, temperature to control by time to pulse microwave energy. By the use of the microwave dryer unit and methods described herein, the overall processing time for making dry sausage may be dramatically reduced, and surprisingly the partial microwave drying was successful in driving the moisture evenly out of the sausage log, including from the center of the sausage log. The process and apparatus described herein allows for an unexpected substantial reduction in processing time and the cost associated therewith using a system which occupies relatively little plant space and is highly reliable.

The dried sausage log may be sliced, optionally cooled to a temperature that is suitable for slicing prior to slicing. A temperature sufficiently low to permit slicing may be about -17.8°C to 1.7°C (0°F to 35°F).

The apparatus may include a Bry-Air dehumidifier system, a slicer, a tunnel chiller, and a single chamber packaging machine. The apparatus may be installed in a plant with the capability to process fermented logs, room for this equipment (*e.g.,* near an outside wall for the Bry-Air system), and an area that is suitable for "Ready to Eat" product. Of course, multiple devices such as those described above may be operated in parallel or series at one or more stages of the process (*e.g.,* three microwave dryers per unit arranged in series), as will be readily understood by persons of ordinary skill in the art. Also, the units described herein may be used in series (*e.g.,* 2 or 3 microwave dryers arranged in a unit).

### Definitions

Unless otherwise indicated, all terms used herein have the same meaning as they would to one skilled in the art. The USDA Food Standards and Labeling Policy Book (2005) identifies ordinary understandings for many terms.

"Dry sausage," and "Semi-dry sausage," as used herein, refer broadly to cured sausages that are fermented and dried. Dry sausages include but are not limited to pepperoni, chorizo, salami, Droëwors, Sucuk, Landjäger, Frizzes, Lola (Lolita), and Lyons. Semi-dry sausages are usually heated to fully heat treat and/or cook the product and partially dry it. Semi-dry sausages include, for example, semi-soft sausages and summer sausage.

"Meat" broadly refers to red meat (*e.g.,* beef, pork, veal, venison, buffalo, and lamb or mutton) and poultry meat (*e.g.,* chicken, turkey, ostrich, grouse, goose, guinea, and duck). The meat used in the present invention may be "organic," "natural," "Kosher," and/or "Halal". The meat may be certified "organic" and/or "natural" by the appropriate state or Federal authorities (*e.g.,* FDA and USDA) and/or by meeting the appropriate standards set forth by said authorities. The meat may be certified to be "Kosher" but the appropriate Rabbinical authorities (*e.g.,* the Orthodox Union, Star-K, OK Kosher Certification) and/or by meeting the appropriate standards set forth by said authorities. The meat may be certified to be "Halal" by the appropriate authorities (*e.g.,* Islamic Food and Nutrition Council of America).

"Reduce," as used herein, refers broadly to grind, dice, slice, chop up, comminute, pestle, granulate, press, cube, mince, mill, grate, grade, crush, roll, shear, divide, hew, or use any other method known in the art for changing a meat from one size to another. The resultant size of meat may be a mixture of sizes or a collection of sizes. Mixtures, collections, and assortments of sizes need not be consistent in that the mixture, collection, and assortment may contain particles of different sizes. The resultant sized meat particles may also be uniform or substantially similar in size.

"Starter culture," as used herein, refers broadly to an inoculum (composition) of lactic acid bacteria which converts added sugar to lactic acid producing fermented food stuffs. In particular, lactic acid bacteria are *Lactobacillus* species. In the present context, the term "lactic acid bacteria" refers broadly to a clade of Gram positive, low-GC, acid tolerant, non-sporulating, non-respiring rod or cocci that are associated by their common metabolic and physiological characteristics. In particular, lactic acid bacteria ferment sugar with the production of acids including lactic acid as well as acetic acid, formic acid, and propionic acid. Lactic acid bacteria are generally regarded as safe ("GRAS") due to their ubiquitous appearance in food and their contribution to the healthy microflora of human mucosal surfaces. The genera of lactic acid bacteria suitable for use in this invention include but are not limited to *Lactobacillus, Leuconostoc, Pediococcus, Micrococcus, Lactococcus, Bifidobacterium,* and *Enterococcus.* Other genera of bacteria suitable for use in this invention include but are not limited to *Staphylococcus, Brevibacterium, Arthrobacter* and *Corynebacterium.*

"Poultry", as used herein, refers broadly to category of domesticated birds kept by humans for the purpose of collecting their eggs, meat, and/or feathers, or wild birds that are harvested for similar purposes. Poultry, includes but is not limited to chickens, ducks, emu, geese, Indian peafowl, mute swan, ostrich, turkeys, guinea fowl, common pheasant, golden pheasant, and rhea.

"USDA requirements and standard of identity," refers broadly to the requirements and standards promulgated by the U.S. Department of Agriculture and available in the USDA Food Standards and Labeling Policy Book (2005).

### Partial Drying of Logs

The inventors surprisingly discovered that the combination of rapid drying using a flow of conditioned air at a low temperature in conjunction with the application of microwave energy greatly reduced the processing time and costs but maintained a desirable qualities of sausage logs, but essentially without cooking the meat or melting fat in the meat, as would be expected when applying microwave energy to sausage. Also, the partial drying of the sausage logs by subjecting them to microwave drying had the unexpected effect of rapidly drying the sausage logs to the desired meat-to-moisture ratio without cooking the sausage logs. Further, the combination of the partial microwave drying had the unexpected effect of thorough, uniform drying of the sausage logs. This was unexpected because the microwave energy would be expected to cook or render the fat, leading to an undesired uneven distribution of dried or even overcooked areas of the sausage logs. In contrast, the inventors surprisingly discovered that microwave energy in combination with conditioned dry air can facilitate rapid drying of sausage logs.

Further the inventors surprisingly discovered that the microwave power used in partially drying sausage logs is well below the usual power range for cooking in commercial microwave ovens. For example, the method described herein may operate at a power level of about 8-12 kW or about 20 kW, in contrast with a power range of about 65-75 kW for commercial microwave ovens. This power range is well below the power range used for commercial microwave oven cooking.

The method for rapid partial drying of sausage logs may begin with thermal processing of dry sausage logs. These logs may be formulated for pepperoni or salami, with meat ingredients (*e.g.,* pork, beef, chicken and/or turkey in various percentages) along with non-meat ingredients such as seasonings, cure, flavorings and/or preservatives.

The sausage logs are transferred to the microwave dryer and placed on the dryer belt. Microwave energy is introduced and controlled. The energy may be pulsed on and off for varying lengths of time (*e.g.,* 1 second to several minutes). Conditioned air may be introduced to the dryer. The air may be dehumidified (*e.g.,* as low as 5% relative humidity), with temperatures ranging from 21.11 to 48.89°C (70 to 120°F).

The dryer may be a linear belt or multi-tiered dryer. For example, the microwave dryer may have 1, 2, or 3 levels of belts running through a microwave dryer. The design features periodic turning of the sausage logs to expose all surface areas equally to the conditioned air.

This method unexpectedly reduced the drying time of logs. Currently, logs are hung in a room with conditioned air for a period of 28-35 days. This is driven by the formulation and target moisture to protein ratio (USDA defined definition for dry sausage. The ratio ranges from most dry (1.6:1 for peperoni) to least dry (3.1 to 1). In contrast, the method described herein may reduce the drying time to a total of about 6-7 days.

The sausage logs are placed on the belt either long edge leading (perpendicular to travel) of short edge leading (parallel to direction of travel). The sausage logs may be about 1.5-3.5 inches (about 40-90 mm) in diameter or about 40-115 mm (about 1.5-4.5 inches). The sausage logs may be about 91-182 cm (about 36-72 inches) in length. Incoming temperatures of logs may be 21.11 to 48.89°C (70 to 120°F).

Logs may be processed in the dryer to achieve 30 to 75% of the required moisture removal (*e.g.,* 25%, 50%, or 75%). The amount of moisture removed depends on how quickly water vapor can move from center of log to the surface without generating excessive heat that would "cook" the product. Water vapor migration is also dependent on the surface of the sausage log to be able to continue to breathe during the process, and avoid formation of crust on the skin which would hinder vapor migration.

An uneven drying and uneven temperature profile could occur across the length of the sausage log, or from the center outward. Microwave energy may be controlled based on sensory input data from the dryer or intermediate product sensors for temperature and/or moisture. Product functionality may be impacted (*e.g.,* taste, texture, slicing characteristics). These may be corrected by adjusting formulation or mixing and grinding parameters. The inventors surprising found that the combination of humidity control and microwave energy allows for the uniform and thorough drying of the sausage logs without formation of a crust on the skin or uneven drying.

The residence time for the sausage logs in the microwave dryer may range from about 1-12 hours. The residence time for the sausage logs in the microwave dryer may range from about 1, 2, 3, 4, 5, 6, 7, 8, 9, 10, 11, 12, 13, 14, 15, 16, 17, or 18 hours. The residence time for the sausage logs in the microwave dryer may be about 12 hours.

Logs would exit the microwave dryer and be transported to a drying room to finish the drying process. Drying time in this room was unexpectedly reduced from the current 28 days to about 3-18 days, optionally about 6-7 days.

Herein below, the process will be described first, and drawings will be used to illustrate an exemplary plant layout and an exemplary technique for modifying a dryer unit so that it may be used as a sausage drying apparatus and methods in the present invention.

### Formulated Meat Mixture

The first step of the process may be the formulation of the meat mixture (*e.g.,* beef, pork, poultry, game) to the desired specification, including the specification for fat. These specifications may be established by the processor or the customer. Initially, the meat may be coarse ground as is well known in the dry sausage industry. The meat may be ground to a size no greater than about 0.32, 0.64, 0.85, 1.27, 1.91, or 2.54 cm (about 1/8, 1/4, 1/3, 1/2, 3/4, or 1 inch). The meat may be ground to a size no greater than about 1.27 cm (about 1/2 inch).

The formulated meat may next be placed into a blender where it is mixed with the salt, culture, water, and spices, and may further comprise oleoresins and a corn-based sweetener or sugar. The formulated meat mixture may be mixed with a cure comprising salt, a nitrite source, and sugar or corn-based sweetener (*e.g.,* dextrose), culture, water, spices, and may further comprise oleoresins. Corn-based sweeteners include but are not limited to, corn syrup, Cerelose®, Clintose®, corn syrup solids, dextrose, fructose, high fructose corn syrup (HFCS), maltodextrins, or Staleydex®. The particular meat mixture, including spices, flavorings, salt, and cultures may be widely varied by those skilled in the art. For example, encapsulated acids (*e.g.,* lactic, citric) may be used to lower pH in the mixture as an alternate method of preparation to possibly eliminate fermentation and thus require only thermal processing of the mixture. As another example, honey, liquid smoke, spices in liquid or powder form, seasonings in liquid or powder form may be added to the meat. Further, sugar includes but is not limited to sucrose, raw sugar, natural sugar, organic sugar, brown sugar, organic cane syrup, organic cane sugar, white sugar, natural brown sugar, muscovado sugar, refined sugar, molasses, confectioners' sugar (powdered sugar), fruit sugar, milk sugar, malt sugar, granulated guar, beet sugar, and superfine (castor) sugar. Salt includes but is not limited to natural salt, natural sea salt, natural rock salt, sea salt, sodium chloride, table salt, natural hand-harvested salt, rare artisan salt, smoked sea salt, and gourmet sea salt, and also includes salt substitutes as used in reduced sodium products, as known in the art. Nitrite sources include but are not limited to vegetable juice powder, sea salt, celery salt, celery powder, celery juice, sodium nitrate, and sodium nitrite. The culture add to the formulated meat mixture may be an inoculum (composition) of *Lactobacillus* bacteria species. The starter culture composition may be provided in any form, including but not limited to a liquid, frozen, dried, freeze-dried, lyophilized, or spray-dried. The starter culture may be mixed in water, as is conventional, before addition to the meat mixture. Further, any one, all, or a combination of these ingredients may be added to the formulated meat mixture individually, in any order, or simultaneously. The blender may operate for about 5 minutes or other length of time preferably to thoroughly mix the ingredients if desired. Additionally, the meat may be ground before it is blended with the ingredients described herein. Also, the meat mixture may be formulated, then ground, and then blended as described herein.

Following blending, the meat mixture may be passed through a final grinder, where it is reduced to a size no greater than about 0.16, 0.32, 0.48 or 1.91 cm (about 1/16, 1/8, 3/16, or 3/4 inches). The meat mixture may be reduced to a size no greater than about 0.48 cm (about 3/16 inches). A bone elimination system may be used here, if bone has not been eliminated earlier in the process. Although grind sizes may be referred to for various stages of the process described herein, these sizes may also be varied by those skilled in the art who would also appreciate the corresponding need for further process modifications, for example in connection with times and temperatures. The size may be selected according to preferences for the final product's shape, texture, flavor and so on, as known in the art. When the meat mixture exits the final grind station, it may be at least about 15.56°C, 10.00°C, 7.22°C, 5.56°C, 4.44°C, 3.88°C, 3.33°C, 2.78°C (about 60°F, 50°F, 45°F, 42°F, 40°F, 39°F, 38°F, 37°F), or less. The meat mixture exiting the final grind station may be about 4.44°C (about 40°F) or less.

The inventors surprisingly discovered that the order of preparing the meat mixture had a direct effect on the quality of product produced. It was discovered that the meat mixture that was ground and then blended unexpectedly lead to a better quality product (*e.g.,* few holes in the final sliced sausage). Without intending to be bound by any theory of operation, it is believed that this modification to conventional processes helped extract protein to encapsulate fat molecules, leading to the improved product. Regardless, the meat mixture may be prepared by a blend then grinding process or an initial blend, grind, and then second blend process.

### Stuffing into Casings or Moulds (or extruding into moulds), Fermentation, and Heat Treating

The next step in the process may be to mechanically stuff the meat mixture into casing or moulds, or extruding into moulds. The casing or mould size, including length, shape and diameter, may be varied, with corresponding changes in the heat treating and fermenting parameters discussed. For example, the sausage logs may be about 40-90 mm (about 1.5-3.5 inches) in diameter or about 40-115 mm (about 1.5-4.5 inches) and may be about 91-182 cm (about 36-72 inches) in length. The stuffed, extruded, or shaped logs may be transferred to ovens where fermentation takes place with the sausage temperature held about 37.78°C (100°F) for about 12 hours. Generally, fermentation conditions are defined by temperature, time, pH, and moisture. The end point of growth may be usually determined by time or measurement of pH. In preparing the cultured products of the present invention, the use of standard techniques for good bacteriological growth may be used.

The fermentation may take place at a temperature of from about -0.56°C to 45.00°C (about 31°F to 113°F). The fermentation may take place at a temperature at about 90°F to 110°F, about 35.00°C to 40.56°C (about 95° to 105°F), or about 37.78°C (100°F) (*e.g.,* 38.00°C (100.4°F)). Other fermentation temperatures may be selected in other instances. The fermentation of the sausage logs may take place over any suitable period to adequately prepared the sausage logs for further processing, such as for a period of about 1 to about 25 hours. Preferably the fermentation may take place over a period about 10 to about 25 hours, preferably from about 12 to about 18 hours, and most preferably about 18 hours. Fermentation may be conducted until a desired endpoint is reached, for example, until the sausage reaches a pH within the range above about 4.5 to below about 5.3. Also, fermentation may be conducted until the pH level is about 5.4. Alternatively, fermentation is conducted until the pH level drops to about 5.3 and is maintained for at least about 5 hours. *See, e.g.,* Food Safety Regulatory Essentials Shelf-Stable Course (2005), pages 109-126, 119-120.

The sausage may then be heat treated, such as by placing it in an oven at least about 53.33°C (about 128°F) for at least about 1 hour. It should be noted that the foregoing heat treatment specification (*i.e.,* at least 53.33°C (128°F) for 1 hour) is identified in government regulations relating to processing meats (*see,* 9 C.F.R. § 318.10), but while it may be desirable to meet such regulations using some methods, other regulations or guidelines may be satisfied in other instances, or in still other instances no particular regulation or guideline may be followed. In a subsequent heat treating step for about 1, 2, 3, 4, 5, 1-6, 2-5, or 3-4 hours about 60.00°C (about 140°F), the internal temperature of the sausage may be raised to at least about 128°F for at least about 1 hour.

### Drying using a Dryer unit

The sausage logs (unsliced) may be placed on the continuous conveyors of specially configured dryer unit. The dryer unit may be a microwave oven that is coupled to a conveyored air dryer, *e.g.,* an AMTek® Microwave with Aeroglide Impingement Conveyored Dryer may be modified to be used in the present invention. The shape, size and number of linear feet of conveyor required for a given operation may be readily determined by those familiar with this technology and in view of the present disclosure, by calculating the initial moisture level, the desired final moisture level, the relative humidity of the air, the total amount of water which must be removed, the temperature, and the conveyor speed, while some routine experimentation may be desirable to confirm or supplement such calculations and to determine the effects of combinations of variables and processing equipment. Additionally, spiral conveyor equipment is known for a variety of food preparation processes and may be used. In spiral conveyor equipment, a food product may be frozen or heated as it moves along a conveyor which forms a number of tiers or levels within a spiral system. *See, e.g.,* U.S. Patent No. 5,942,265. Another modification expected to provide improved results is the use of a multi-belt conveyor having multiple levels of belts or side-by-side belts. In such a system, the belts may be operated in parallel (*i.e.,* multiple processing lines in the unit), series (*i.e.,* product passes through the unit multiple times) or both.

The conveyor may move at speeds which may be controlled. For example a conveyor may be operated at a speed of about 15.24 to 91.44, 38.10 to 60.96, or 30.48 to 76.20 m per minute (about 50 to 300, 125 to 200, or 100 to 250 feet per minute). Also, the conveyor belt may be operated at a speed of about 1.52-15.24 m per minute or 1,52 m per minute (about 5-50 feet per minute or 5 feet per minute). The microwave dryer unit may be used to reduce the amount of moisture contained in the sausage logs, from initial levels on the order of about 50% to a final moisture content where the ratio of moisture to protein is equal to or otherwise satisfies USDA Requirements and Standard of Identity. *See* USDA Food Standards and Labeling Policy Book (2005) and USDA Principles of Preservation of Shelf-Stable Dried Meat Products (2005). For example, the ratio of moisture to protein may be about 2.3:1, 2.2:1, 2.1:1, 2.0:1, 1.9:1, 1.8:1, 1.7:1, 1.6:1, 1.5:1, or 1.4:1. The moisture to protein ratio may be at least about 2.3:1 (*e.g.,* Genoa salami), 2.1:1 (*e.g.,* hard salami), or 1.6:1 (*e.g.,* pepperoni). The ratio of moisture to protein may be about 1.9:1 or less (*e.g.,* dry sausage).

This reduction in moisture content may be accomplished by exposing the sausage logs for about 15-30 minutes to air flow, such as turbulent or laminar air flow, within the dryer unit with the incoming air being dried to a relative humidity of below 60%. The sausage logs may be dried in the microwave oven for about 1, 2, 3, 4, 5, 6, 7, 8, 9, 10, 11, 12, 13, 14, 15, or 16 hours. The sausage logs may be dried in the microwave dryer for about 1-12 hours, optionally about 12 hours. The relative humidity of the conditioned air may be below 5, 10, 15, 20, 25, 30, 40, 50, or 60%. For example, the relative humidity of the conditioned air may below about 50-55%. The temperature of the air entering the dryer unit may be maintained between about 50°F to 120°F. The temperature of the air entering the dryer unit may be maintained between about 4.44 to 54.44°C, 10.00 to 48.89°C, or 15.56 to 43.33°C (about 40 to 130°F, 50 to 120°F, or 60 to 110°F). The relative humidity may be below about 10%, 15%, 20%, 25%, 30%, 35%, 40%, 45%, 50%, 51%, 52%, 53%, 54%, 55%, or 60%. The air may be introduced at a temperature of between 4.44°C and 37.78°C (between 40°F and 100°F) at a relative humidity of below 50%, and the drying time may be between 1 and 12 hours, although it is believed that even faster drying times, such as 2 hours, may be accomplished with other methods depending on the adjustment of the variables and the particular material being processed.

The air flow through the dryer may be adjusted to suitably dry the product. For example, the air flow may be at least about 2.83 to 8.50 cubic m per minute (about 100 to 3,000 cubic feet per minute (cfm)) at a linear air flow over the dry sausage of about 30.48 to 609.60 m per minute (m/min) (about 100 to 2,000 feet per minute (ft/min)). The air flow may be at least about 56.63 to 70.79 cm/min or at least about 56.63 or 67.96 cm/min (about 2,000 to 2,500 cfm, or at least about 2,000 or 2,400 cfm), and/or at a linear air flow over the dry sausage of about 304.80 to 457.20 m per minute (m/min), or at least about 54.86 to 274.32 m/min (about 1,000 to 1,500 feet per minute (ft/min), or at least about 180 to 900 ft/min). Also, the air flow through the dryer may be about 28.31, 42.48, 56.63, 59.47, 60.88, 62.30, 65.13, 67.96 cubic m per minute (m³/min) (about 1,000, 1,500, 2,000, 2,100, 2,150, 2,200, 2,300, 2,400 cubic feet per minute (ft/min)) at a linear air flow over the dry sausage of about 340.80, 342.90, 381.00, 457.20, or 533.40 m per minute (m/min) (about 1,000, 1,125, 1,250, 1,500, or 1,750 feet per minute (ft/min)). The airflow may be turbulent, laminar, or any combination thereof. The airflow may be set at a velocity that is just below the velocity at which the sausage logs are thoroughly and evenly dried. Additionally, the air pressure in the dryer unit may be maintained at about atmospheric pressure (atm) (*e.g.,* about 760 torr or 101 kPa) via the use of make-up air from the air flow system.

The microwave dryer unit may also have additional scaling and monitoring equipment (*e.g.,* vision cameras, thermal imaging devices, near infrared imaging devices (NIR)) to allow for quality and yield validation of the sausage product. For example, a "pre-dried" product checkweigher may check the weight of the sausage log (unsliced) before drying in the dryer unit. A vision/camera system may be used prior to entry of the product in the dryer unit for monitoring the product load (*i.e.,* placement, defects, and other properties of the product). A checkweigher or other monitor also may be provided within the microwave dryer unit to confirm that processing is occurring as expected (*e.g.,* at the expected weight and product placement on the conveyor), and such a system (or others) might be operated as part of a control feedback system. For example, if the mid-point checkweigher determines that product is still too heavy with water, later operations may be enhanced to accelerate the removal of water in the final processing steps. After the product exits the microwave dryer unit, thermal monitoring or other monitoring systems may be used for monitoring dry sausage product quality. A "post-dried" product checkweigher may be used for yield verification prior the dry sausage product to be conveyed to the freezing unit. Also, monitoring instrumentation for measuring property values of "dry" supply air and "wet" exhaust air may be included in the system.

The conditioned air may be dried by utilizing a desiccant based system or other kinds of dehumidifier. In a desiccant based system, a wheel or other desiccant-laden part adsorbs moisture from the air, thereby providing air with very little moisture content, and then is regenerated with hot air that causes the adsorbed water to evaporate so that the desiccant material can be re-exposed to the air stream and remove moisture. Other kinds of dehumidifier might include a refrigerated coil that is used to condense moisture out of the air. Suitable dehumidifying equipment is readily available from companies such as Bry-Air, Munters, EVAPCO, and Frick. The ambient air coming off the system may be above 37.78°C (100°F), and the air may be cooled down to about 10.00°C (about 50°F) before re-entry. The temperature and humidity of supply air to the system at the discharge of the unit supplying the air may be measured using sensors, and the temperature and humidity of air leaving the system at the exhaust ductwork of the microwave cavity may be measured using sensors. This information may be used to control the temperature and humidity of the conditioned air. Further, multiple units may be arranged on a microwave dryer unit.

The air flow may enter the dryer unit at several points. For example, in a dryer unit having a single microwave cavity, the cavity may have three points of entry for the air. Inside the cavity, the air may directed down onto the sausage logs, but lateral and vertical flows could be used, as could combinations of flow directions. The air flow supplying the oven may be about 28.32 cubic m per minute (m³/min) to 70.79 m³/min (about 1000 cubic feet per minute (cfm) to 2500 cfm). The air velocity across the surface of the sausage log may act to remove moisture and heat. The air velocity may be about 457.20 m per minute (m/min) (about 1500 feet per minute (ft/min)). Higher air flow (cmm; cfm) and air velocity (m/min; ft/min) may shorten the drying time and/or allow for higher production rates through a given system. The exhaust of the system may also be modified. For example, the system described herein may have one exhaust fan in the center of the oven and may produce about 14.16 m³/min (about 500 cfm) of exhaust. Additional exhaust fans may be added to the system with a concurrent increase in the air supply to maintain approximately neutral pressure in the oven. Additionally, the conditioned air supply may be provided from the bottom of the conveyor in the dryer unit impinging on the product from the bottom side. Impingement of the conditioned dry air may accelerate the drying process. Other modifications as described elsewhere herein may also be used.

In units with multiple microwave cavities, each cavity may have its own separate air flow system, or the airflow may be interconnected between cavities.

The inventors surprisingly discovered that the temperature range in which fat melts in the meat mixture is important for optimizing processing time and product quality. Fats are generally heterogeneous compositions comprising different compounds with different characteristics, and these compounds melt at different temperatures. Thus, instead of changing from a solid to a liquid quickly, certain compounds melt at a lower temperature, weakening the overall structure (*e.g.,* the fat begins to soften). Most solid fats do not melt suddenly at a precise point, but do so gradually over a range of about -12.22--6.67°C (about 10-20°F). Eventually, all of the compounds melt and the fat becomes a liquid. Thus, the air temperature in the microwave oven and conveyor dryer may be about 4.44 to 54.44°C, or preferably 10.00°C to 48.89°C (about 40 to 130°F, or preferably 50°F to 120°F). The upper limit of the range may be about 48.89°C to 54.44°C (about 120°F to 130°F) because the temperature at which fat melts depends on the fat (*e.g.,* origin).

Measures also may be taken to ensure the internal parts within the dryer unit do not reach excessive temperatures that would sear the meat or heat the meat by radiation. For example, the conveyor movement and airflow may be sufficient to prevent a substantial or detrimental rise in surface temperatures of the conveyor or other parts. The exact selection of the temperature may vary depending on the composition of the fat in the particular meat(s) being processed. Additionally, thermal imaging, near-infrared (NIR) imaging, or vision systems may coupled with the dryer unit to allow control of microwave power, belt speed, air flow, and air temperature. Sensors and other control systems may also be coupled with the dryer unit to allow monitoring of the production process (*e.g.,* temperature, air flow).

The ability to remove moisture from the core of the sausage log through to the surface without experiencing temperatures that could render the fat molecules has been a challenge in the art. Hence it was expected that microwave energy would render the fat in the sausage logs leading to an undesired uneven cooking effect, *e.g.,* incomplete drying, an uneven distribution of cooked portions in the sausage log, large holes, poor flavor and color characteristics. The inventors surprisingly discovered that pulsing the microwave energy will be pulsed. Further, method may utilize a control system to monitor inlet and outlet moisture percentage of the air as a means of calculating moisture removal rates. The system may also feature internal infrared thermometers to monitor surface temperature of the sausage logs. Additionally, the belting may be constructed as to allow for maximum airflow but keep the sausage logs in position throughout the process.

As will be understood from this disclosure, loading characteristics of different products (either other kinds of sausage or products in different shapes), might require variations to the processing variables, which can be readily determined with routine experimentation in view of the present disclosure.

Another characteristic of the microwave drying process is to drive the air flow down through the center of the conveyor over the food product. Although air distribution systems are known in the art, its use for drying dry sausage, particularly in combination with applying microwave energy, is not. The air drying method described herein combines low humidity and low temperature with a dry air flow down the center of the food product that unexpectedly produced a dried sausage product in a greatly reduced period of time (*e.g.,* minutes versus days or weeks). The inventors surprisingly discovered that the low temperature and low humidity combination coupled with the direction of an conditioned air flow down the center of the food product in the microwave oven greatly reduced the processing time (*e.g.,* curing time) of the dried sausage. This is in contrast to traditional curing processes which are long periods of time from days to weeks.

As will become more apparent when the plant layout is described later in this application, the appropriate characteristics for the air entering the dryer unit may be accomplished by the use of microwave energy but also using both steam coils and refrigeration coils. Any commercially available microwave oven may be used. For this application, and depending on ambient conditions existing in the plant, there may be a need to heat the air, or to cool it, and refrigeration systems are highly desirable to assist in water removal as is well known in the air-handling art. It is also possible to modify the system which will be described shortly to include chemical desiccant systems for moisture removal. Further information regarding the dryer will be provided in a subsequent section of the specification. For example, a system for the rapid preparation of dry sausage may produce at least about 771.11 kg/hour (about 1,700 lb/hour) of finished product. The system also may be adapted to better meet space requirements, for example, the oven may be wider instead of longer to conserve floor space.

### Drying Chamber

The heat treated sausage logs may then be partially dried in a drying chamber for about 1-7 days, optionally about 6 or 7 days. The sausage logs may be dried for about 1-7 days, optionally 7 days at drying chamber conditions 12.78-18.33°C (55-65°F) and relative humidity 65-75% and air circulation at about 9.14 cm (about 0.3 feet)/second air velocity. The sausage logs may be stored for drying in a drying chamber at least about 1-31 days, optionally 1, 2, 3, 4, 5, 6, 7, 8, 9, 10, 11, 12, 13, 14, 15, 16, 17, 18, 19, 20, 21, 22, 23, 24, 25, 26, 27, 28, 29, 30, or 31 days. The sausage logs may be dried for 1, 2, 3, 4, 5, 6, or 7 days. The sausage logs may be dried for about 7 days. The sausage logs may be dried for about 6 days. The inventors surprisingly found that this partial drying prior to microwave cooking/drying produces a dried sausage product in less than one a quarter the time than current methods.

### Freezing Tunnel

Returning to the overall process characteristics, the sausage logs may be conveyed from the microwave cabinet to a freezing tunnel or other system for chilling or freezing the product for packaging or transfer for use with the particular final product (*e.g.,* pizza, sandwich meat, calzones.) While drying may be completed in about 1 to about 30 minutes (*e.g.,* 2 to 10 minutes), the time required for freezing or chilling the product, to below about 35°F (*e.g.,* about-17.78°C to 1.67°C (about 0°F to 35°F)), may be dependent upon the length of the freezer tunnel, the temperatures maintained therein and conveyor speeds. The product may be spend about 1-30 minutes in a continuous freeze tunnel or freezing could take place in a chamber or room where freezing may take about 6-24 hours to chill down to 1.67°C (35°F). The heat treated sausage logs may then be cooled, such as by cooling to an internal temperature of about 1.67°C (about 35°F) or below. For example, the final temperature of the heat treated sausage may be about -17.78°C to 1.67°C (about 0°F to 35°F). In most cases, the product may be frozen after drying is complete. For example, the product may be dried in a drying chamber and then in a microwave dryer oven, followed by chilling in a continuous freeze tunnel or freezing chamber. Also, the product may be dried in a microwave dryer oven and then a dryer room, followed by chilling in a continuous freeze tunnel or freezing chamber.

### Cutting (slicing or dicing)

The sausage logs may be sliced using a slicer (*e.g.,* a Weber Model 905 slicer) to a size of about 4 mm or less. The slices may be about 1.25 mm to 2.5 mm. For example, the slice may be about 1, 1.1, 1.2, 1.22, 1.23, 1.24, 1.25, 1.3, 2, 2.5, 3, 3.18, 3.5, 4, 4.5, or 5 mm. The slices may be 1.25 mm or 2.5 mm. In lieu of or in addition to slicing, the sausage logs may be diced or cubed to form different shape products. Conventional dicing processes may be used, as known in the art. As with sliced product, the size of the diced product might implicate the further processing steps. Conventional cubing processes may be used and are known in the art. As with the sliced product, the size of the cubed product might implicate further processing steps.

Other types of food products may be dried at an accelerated rate in the dryer unit. The present disclosure refers generally to sausage (which takes many forms), but it could be applied to the production of other products such as jerky, dried snack sticks and others. By the use of the dryer unit described herein, the overall processing time for making dry sausage may be dramatically reduced. The process and apparatus described herein allows for a substantial reduction in processing time and the cost associated therewith using a system which occupies relatively little plant space and is highly reliable.

### Process for Making Dry Sausage

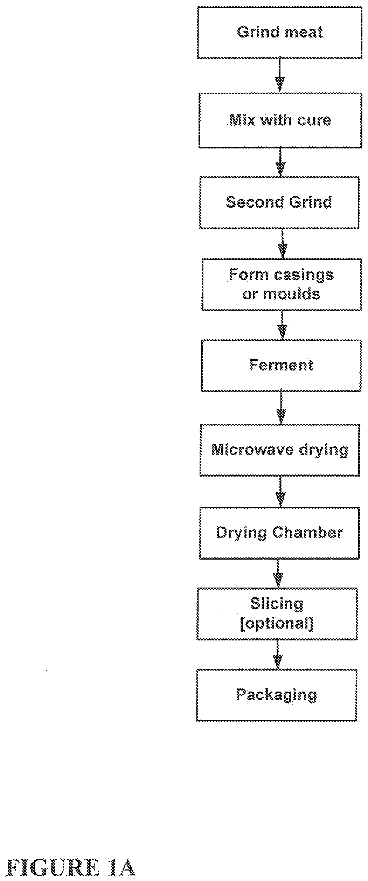

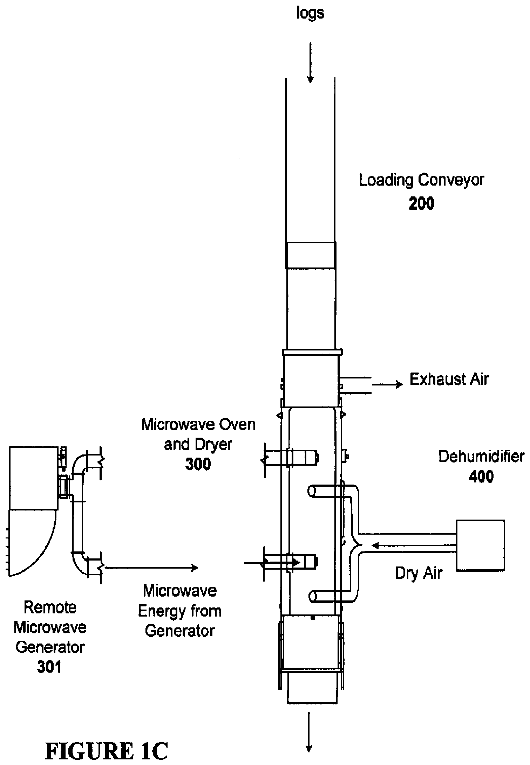

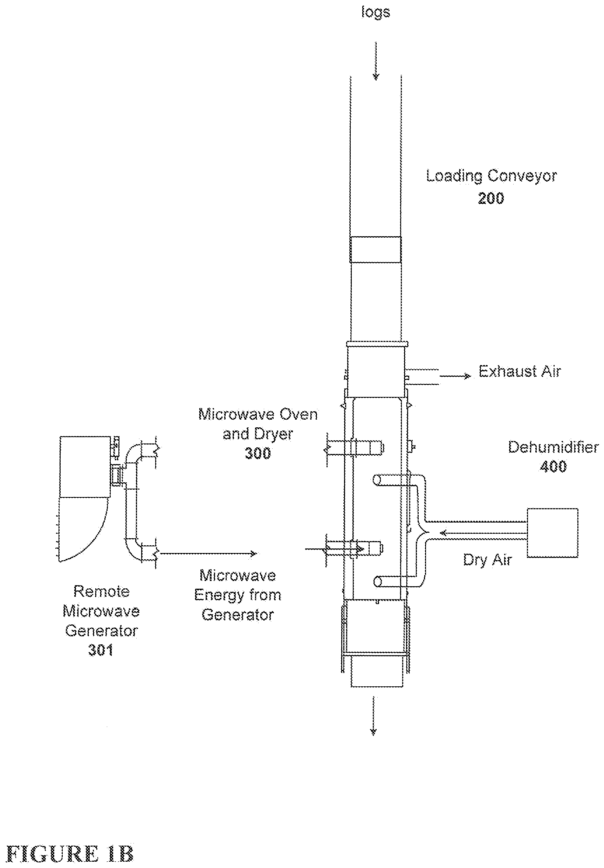

Proceeding now to a description of the drawings, **FIG. 1C** shows an exemplary plant lay-out for carrying out steps of the process of the prevent invention. The processing area is illustrated in schematic form only, as that equipment, in and of itself, may be conventional. The blending equipment-which may be provided upstream of the shown equipment-is not shown, as such equipment is well known in the art. In **FIG. 1C****,** loading conveyor **200,** microwave dryer **300,** and dehumidifier **400.** Thus the sausage logs may be loaded intact (unsliced) onto the loading conveyor **200** and transported to the microwave dryer unit **300.** The sausage logs may be laid 1, 2, 3, 4, 5, or 6 across. The loading conveyor terminates at a transverse conveyor where product is uniformly distributed onto a continuous conveyor **304** of the dryer unit **300.** Any suitable equipment for uniformly distributing the product onto the conveyor may be used. The energy used in the dryer unit **300** may be generated by a remote microwave generator **301.** Dry conditioned air may be supplied by a dehumidifier **400.** The partially dried sausage logs may be deposited onto a conveyor. Also, the loading conveyor may terminate at a buffer, collator, shaker deck, or retractable loader. Additionally, thermal imaging, near-infrared (NIR) imaging systems, sensors, or vision systems may coupled with the dryer unit to allow control of microwave power, belt speed, air flow, and air temperature. Also, the sausage logs may be first dried in a microwave oven dryer as described herein and then dried in a drying chamber prior to final processing (*e.g.,* chilling, slicing, and packaging).

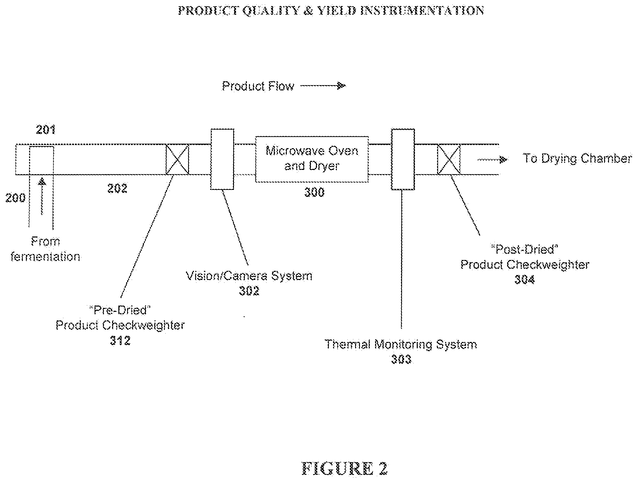

In **FIG. 2A** and **2B****,** the dryer unit **300** receives the dry sausage from the fermentation process or from a drying chamber. Intact sausage logs (unsliced) may be loaded onto a loading conveyor and transported to the dryer unit **300.** The conveyor terminates at a transverse conveyor **201** where product is uniformly distributed onto the continuous conveyor **202** of the dryer unit **300.** Also, the loading conveyor may terminate at a buffer, collator, shaker deck, or retractable loader. The product within the dryer unit is exposed to a turbulent air flow where it may be dried to a relative humidity of below about 60% for about 1 to 30 minutes. The relative humidity of the conditioned air may be below about 5, 10, 15, 20, 25, 30, 40, 50, or 60%. For example, the relative humidity of the conditioned air may be below about 50-55%. Also, the relative humidity of the conditioned air may below about 25%. The drying time may also be about 2 to 10 minutes, 2 to 15 minutes, or 15 to 30 minutes. Intact sausage logs may be dried for 1, 2, 3, 4, 5, 6, 7, 8, 9, 10, 11, 12, 13, 14, 15, or 16 hours. The sausage logs may be dried for about 1-12 hours. The temperature of the air entering the dryer unit may be maintained between about 4.44°C to 54.44°C (about 40°F to 130°F). For example, the temperature of the air entering the dryer unit may be maintained between about 10.00°C to 48.89°C (about 50°F to 120°F). Also, the temperature of the air entering the dryer unit may be maintained between about 10.00°C to 54.44°C (about 50°F to 130°F). The air flow through the dryer may be at least about 2.84 to 84.95 cubic m per minute (m³/min) (about 100 to 3,000 cubic feet per minute (cfm)) at a linear air flow over the dry sausage of about 30.48 to 60.96 m per minute (m/min) (about 100 to 2,000 feet per minute (ft/min)). The air flow may be at least about 56.63 to 70.79 m³/min (about 2,000 to 2,500 cfm), or at least about 67.96 m³/min (about 2,400 cfm), and at a linear air flow over the dry sausage of about 304.80 to 457.20 m per minute (m/min) (about 1,000 to 1,500 feet per minute (ft/min)), or at least about 54.86 to 274.32 m/min (at least about 180 to 900 ft/min). As noted above, other air properties and air flow parameters may be used.

The microwave energy may be pre-set or actively controlled by utilizing inline checkweighers (*e.g.,* at the entrance, middle, and discharge of oven), and/or infrared sensors to monitor the product leaving the oven and feedback to control system to adjust microwave power and/or pulse time (on/off). Additionally, thermal imaging, near-infrared (NIR) imaging systems, sensors, or vision systems may coupled with the dryer unit to allow control of microwave power, belt speed, air flow, and air temperature. For example, a "pre-dried" product checkweigher **312** may check the weight of the sausage log before drying in the dryer unit. Further, a "pre-dried" product checkweigher **312** may check the weight of the sausage log before drying in the dryer unit. A vision/camera system **302** may be used prior to entry of the product in the dryer unit for monitoring the product load. After the product exits the dryer unit, thermal monitoring system **303** may be used for monitoring dry sausage product quality. A "post-dried" product checkweigher **304** may be used for yield verification prior the dry sausage product to be conveyed to the freezing unit. Also, monitoring instrumentation for measuring property values of "dry" supply air and "wet" exhaust air may be included in the system.

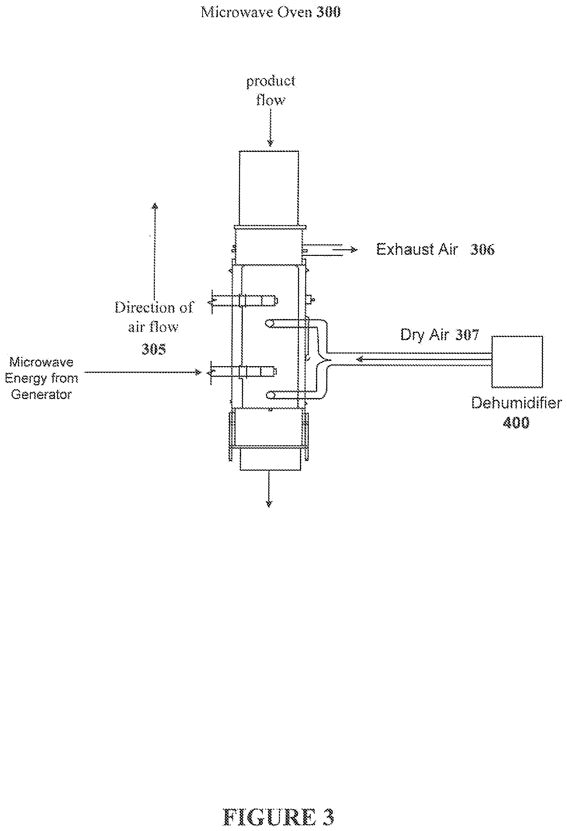

As depicted in **FIG. 3****,** the direction of air flow **305** may be opposite the direction of the dryer unit **300,** in which case the dryer unit may maintain a gradient of dry air flowing over the sausage logs, with relatively dry air at the microwave oven's product exit, and relatively moist air **306** at the product entry end of the dryer unit 300. The conditioned air **307** that passes over the center of the sausage logs on the conveyor may have a relative humidity of below about 50-55%, as measured when the air enters the dryer unit 300. The conditioned air for the coupled dryer unit **300** may be introduced at the top and from the bottom, thus providing direct conditioned air over sausage logs. The conditioned air creates a "wind-chill" effect which both whisks moisture off the product surface and cools the product surface via evaporative cooling to prevent undesirable heating of the product. The inventors surprisingly discovered that this combination of the removal of the moisture and the cooling of the product surface prevented the heating of the product to the temperature at which the fat may melt (*e.g.,* 48.89°C-54.44°C (120°F-130°F)). This had the unexpected effect of reducing the formation of holes in the finished product which renders the finished product unusable for many applications (*e.g.,* pizza topping or sandwich meats). A recirculating system may be used, in which dry air **307** may be supplied by a dehumidifier **400** which reduces the humidity of the exhaust air **306** received from the dryer unit **300.** Also, the system may not recirculate air. The dehumidifier may supply the dry air **307** to the dryer unit under positive pressure (*e.g.,* about at least one atmosphere pressure, *i.e.,* 101 kPa or 760 torr). Additionally, sensors may coupled with recirculating system to allow control of air flow, air temperature, or air pressure.

In one configuration as depicted in **FIG. 3****,** the conditioned air enters from one end of the drying unit and exhausts at a distant end producing a parallel-flow or cross-flow drying. *See* Figure 3. For example, the microwave energy may travel through "waveguides" (depicted on the left side of the dryer unit **300**), and the dry air **307** may enter from the opposite side.

Although **FIG. 3** depicts one dryer unit section, the dryer unit may be a chamber that has multiple connected or spaced apart modules that operate in series or parallel with respect to the processing path of the product. Such a dryer unit chamber may be provided, for example, by using separate microwave or/air flow cavities located within a single continuous chamber, or forming the chamber as a series of spaced microwave and/or air flow cavities. The separate cavities may be separated by microwave chokes that inhibit or block microwaves from passing between cavities. Such chokes are known in the art. Separate cavities also may be separated by restricted passages (*e.g.,* passages that are the full width of the belt, but relatively low, such as being only 4 inches high for a 48 inch wide belt), to help isolate air flow from one microwave cavity from the next. The use of multiple cavities may be particularly beneficial to provide different processing parameters in the different cavities. For example, one cavity may have different microwave intensities and/or pulse patterns as compared to one or more other cavities. Or, one cavity may have different air flow rates, temperatures or pressures than another one of the cavities. Of course, both the microwave properties and the air properties may vary from cavity to cavity. It is expected, for example, that a process may successfully operate having microwaves provided in a first cavity (with or without a conditioned air flow), and only a conditioned air flow provided in a second, downstream, cavity.

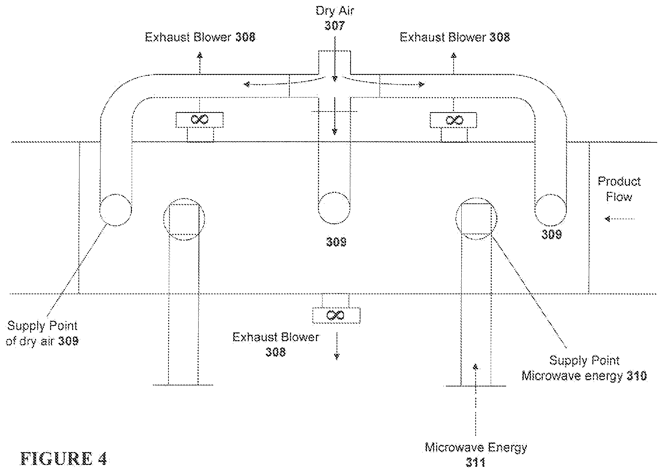

In **FIG. 4****,** the conditioned dry air may be introduced into the dryer unit from the top at one, two, three, or more locations. The dryer unit **300** configuration may comprise three entry points for conditioned air **307** from the top **309** of the dryer unit **300,** three exhaust points **308** on the side of the dryer unit, and two supply points of microwave energy **311** on the top **310** of the dryer unit. The microwave supplies **310** may be simple microwave guide outlets, or they may include features to help distribute the microwave energy, such as a rotary microwave feed (*e.g.,* a rotating disc that deflects the microwave energy emitted from the microwave guide.) The exhaust blowers **308** (or simply outlets not having blowers on them) may be connected to a common header and located below the belt line. The microwave energy may be from a generator and supplied in top of the oven **311.** Also, different arrangements of outlets may be used. For example, three outlets may be located along the bottom of the oven and dryer. Also, different airflow arrangements may be used herein. For example, in a system having three air openings on the top of the unit arranged along the product processing direction, and three air openings on the bottom of the unit arranged along the product processing direction, two upper and two lower openings may be inlets, and one upper and one lower opening may be outlets. The inlets may be the openings furthest downstream so that the air flows generally against the direction of product movement, but other arrangements may be useful.

Air may be exhausted from one side (*e.g.,* center and from the bottom). Air may also be exhausted on the opposite side, closer to the discharge and from the bottom. Also, the conditioned air may be supplied "up" from the bottom impinging the product from the bottom side which may further accelerate the drying process.

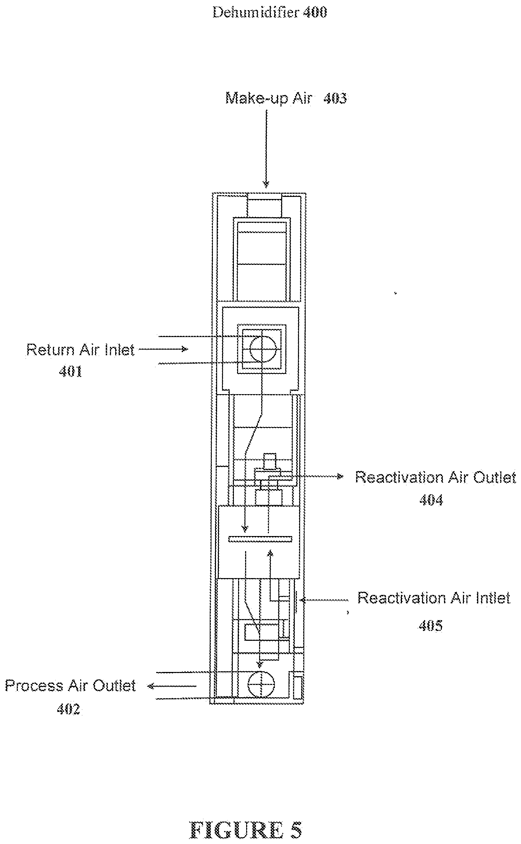

In **FIG. 5****,** the dehumidifier **400** dries the air taken from the dryer unit, preferably maintains a constant air flow rate and pressure in the dry air **307** supplied to the dryer unit. Of course, such pressure and flow rate may vary once the air passes through the dryer unit 300. The dehumidifier **400** takes in air from the microwave oven in a return air inlet **401,** removes moisture from the air, and returns dry air to the dryer unit via a process air outlet **402.** The dehumidifier **400** may maintain air pressure via make-up air **403,** taking in air to compensate for any air leaks that occur within the dryer unit or elsewhere in the air circuit. Any suitable dehumidification system may be used. For example, the dehumidifier **400** may comprise an adsorption-type dehumidifier that uses a desiccant material that is alternately exposed to the working airstream (*i.e.,* the airstream passing through the dryer unit) to adsorb moisture from the air, and then to a reactivation airstream that dries the desiccant. Such a system would include the shown reactivation air inlet **405** and outlet **404** for the airflow that reactivates the desiccant by drying it. For example, the desiccant may be provided on a rotating wheel that passes through the working and reactivation airflows, or in stationary beds over which the airflows are alternated. Additionally, thermal imaging, near infrared (NIR) imaging systems, sensors, or vision systems may be coupled with the dehumidifier to allow control of the air humidity and air temperature. Other dehumidifiers **400** may use refrigeration coils to condense water out of the air, which may be used in conjunction with a heater to reheat the air. These and other dehumidifier systems are known in the art.

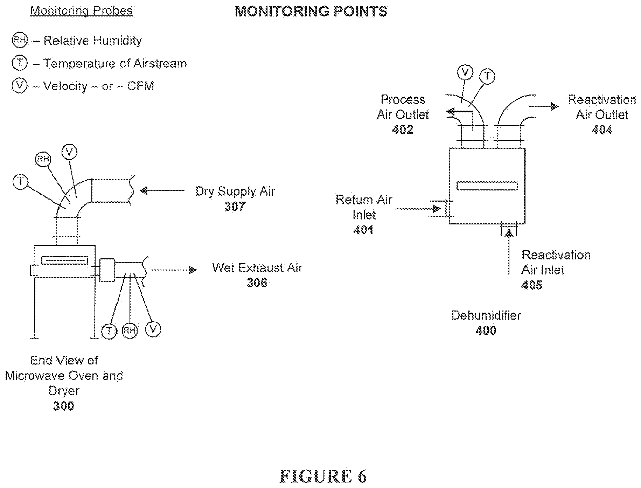

In **FIG. 6****,** monitoring points for evaluation and control of the conditioned air flow are shown including an end view of the dryer unit **300** and the dehumidifier **400** (*e.g.,* desiccant wheel style). In the end view of the dryer unit **300,** the dry supply air **307** enters the dryer unit **300,** passes over the product, and then exits as relatively humid exhaust air **306.** Near the inlet of the dry supply air **307,** the relative humidity, airstream temperature, or velocity (or CFM) of the air may be monitored using probes. Near the outlet of the "wet" exhaust air **306,** the relative humidity, airstream temperature, or velocity (or CFM) of the air may be monitored using probes. Multiple locations for inlets of dry supply air **307** and outlets of wet exhaust air **306** may be included. In the dehumidifier **400,** near the process air outlet **402,** the airstream temperature, or velocity (or CFM) of the air may be monitored using probes.

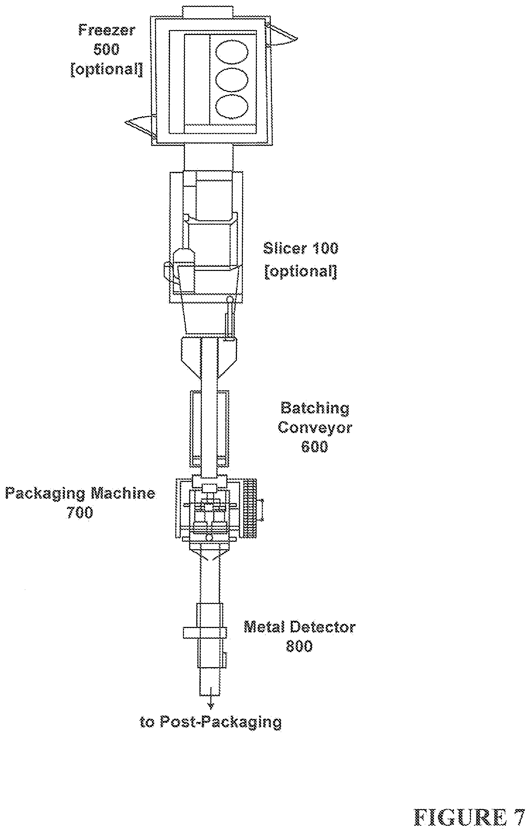

In **FIG. 7****,** the system may comprise a conveyor that transports the sliced sausages or sausage logs to a freezer **500.** The freezer (*e.g.,* freezing tunnel) **500** cools the dry sausage for packaging or transfer for use with the particular final product (*e.g.,* pizza, calzones, sandwiches, packages of sliced dry sausage, dried sausage logs.) The time required for freezing or chilling the product, to below about 1.67°C (about 35°F), may be dependent upon the length of the freezer tunnel, the temperatures maintained therein and conveyor speeds. Further, the temperature of the dry sausage may be about -17.78°C to 1.67°C (about 0°F to 35°F). Freezers are known in the art and need not be described in detail herein. Additionally, thermal imaging, sensors, near infrared (NIR) imaging systems, or vision systems may coupled with the freezer to allow control of temperature or belt speed. The product may be chilled in a freezer for about 1-10 minutes. Also, the product may be chilled in a freezing chamber for about 6-24 hours to a temperature of about -17.78°C to 1.67°C (about 0°F to 35°F). The system may include one or more slicing machines **100,** each of which deposits sliced dry sausage onto a conveyor. A single slicing machine **100** is shown, but other slicing machines may deposit meat onto the conveyor. As noted herein, dicers may be used instead of slicers. Further, the product may be cubed. The cooled product is deposited on a batching conveyor **600** for transport to a packaging machine **700** then to a metal detector **800** and post-packaging. The packaging machine may be a vertical or horizontal packaging machine including but not limited to a vertical Form/Fill/Seal (VFFS) packaging machine, horizontal Form/Fill/Seal (HFFS) packaging machine, or a premade pouch packaging machine. Further, the packaging may be modified atmosphere (MAP) or vacuum packed.

Also, the process may begin with microwave oven drying and then be followed by drying in a drying chamber prior to further processing, optionally chilling, slicing, and packaging. For example, the sausage may be fermented and heat treated then dried in a microwave oven dyer and then dried in a drying chamber or the sausage may be dried in a drying chamber and then dried in a microwave oven dryer.

Now that the equipment and the processes have been described in sufficient detail to enable one skilled in the art to practice the preferred form of the invention, it will be even more apparent how variations of time, temperature and humidity may be made by those skilled in the art to take into account a particular processing environment. For example, relatively more heat must be added to the air flow in colder climates, while if processing were to take place in humid, warm environments, such as the southern part of the United States, especially during the summer, additional refrigeration capacity might be needed to lower humidity to a level of below about 60%. The relative humidity of the conditioned air may be below about 30, 40, 50, or 60%. For example, the relative humidity of the conditioned air may be about 50-55%. Additionally, the relative humidity of the conditioned air may be about 25%. It may also be necessary to maintain the air in a cooled condition downstream of the refrigeration coils if ambient temperatures are in excess of about 32.22°C (about 90°F), the upper end of the preferred processing range.

Moreover, in the present invention, air flow not only dries the meat (*e.g.,* reduces the *m*oisture) but maintains the temperature of the sausage product below the temperature at which the fat in the meat product would melt *(e.g.,* 48.89°C to 54.44°C (120°F to 130°F)). This avoids the problem of rendering the sausage product which occurs when the fat in the sausage product melts. For example, the use of a microwave oven alone to dry meat products may lead to melting the fat in the sausage product and this ruins the product by changing the moisture, consistency, and flavor of the sausage product. Further, the use of a microwave oven alone to dry meat products, especially sliced sausage product may leave large holes in the meat product rendering it unusable for end uses (*e.g.,* pizza topping, sandwich meat). This is also a problem with sausage logs where microwave ovens used to dry sausage logs may leave similar large holes in the meat product making it unsuitable for slicing into sausage slices.

Accordingly, the inventor surprisingly discovered that the combination of the use of conditioned air flow and microwave heating allows for the rapid drying of sausage logs without rendering the product. For example, the use of conditioned air flow and microwave heating allows for the rapid drying of sausage logs while achieving the desired moisture (*e.g.,* 1.6:1 moisture-to-protein ratio or 2.3:1 moisture-to-protein ratio), consistency, and flavor. Each alone, has the problem of being limited to permeable casings and slow drying time in air flow alone; or damaging the sausage product to make it undesirable in using microwave drying alone. In the present invention, the combination of the conditioned air flow and microwave drying, it is believed that the conditioned air flow removes the moisture from the surface of the sausage product and the microwave evacuates moisture from the center of the meat product. This combination results in a synergy that allows for a more uniform and consistent drying of the meat product while maintaining the sausage product below the temperature at which the fat inside the sausage product would melt, thus avoiding problems with air flow or microwave drying alone.

In addition to providing improved product feel and greatly reduced processing times, processes as described herein also may provide benefits to other parts of the manufacturing process. For example, the product may be in its final form and ready for packaging and shipment immediately after leaving the drying chamber (of course, it may still be chilled, sliced, stacked, or otherwise processed after leaving the drying chamber to preserve and package the meat). In this sense, it can be said that the meat is processed into its final commercial shape before it even enters the drying chamber. Despite this advantage, it may be desirable to conduct further shape processing, such as further slicing or dicing, after the product leaves the drying chamber. Indeed, such further operations may even be facilitated by the reduced moisture to protein ratio of the meat after it exits the drying chamber.

Although certain manufacturers, model names and numbers are given for machinery used in the invention, other machinery may be substituted, as would be appreciated by those skilled in the art.

## Claims

1. A method for preparing dry sausage comprising:
(a) preparing a dry sausage meat mixture;
(b) stuffing the mixture into a casing or mould, or extruding into moulds, to form a sausage log;
(c) fermenting the unsliced sausage log;
(d) heat treating the unsliced sausage log;
followed by
(e) placing the sausage log onto a conveyor;
(f) passing the conveyor with the unsliced sausage log thereon through a chamber;
(g) introducing into the chamber a supply of conditioned air having a relative humidity below 60% and a temperature in the range of 4.44°C to 54.44°C (40°F to 130°F);
(h) introducing a supply of microwaves into the chamber,
wherein the sausage log remains in the chamber for 1-12 hours wherein the supply of conditioned air and the supply of microwaves are selected to reduce the moisture content of the unsliced sausage log to a predetermined moisture to protein ratio; and
(i) drying the sausage log in a drying chamber for 1-18 days,
wherein the conditions are selected to reduce the moisture content of the unsliced sausage log to a predetermined moisture to protein ratio,
or followed by
(e') drying the sausage log in a drying chamber for 1-18 days,
wherein the conditions are selected to reduce the moisture content of the unsliced sausage log to a predetermined moisture to protein ratio;
(f') placing the unsliced sausage log onto a conveyor;
(g') passing the conveyor with the unsliced sausage log thereon through a chamber;
(h') introducing into the chamber a supply of conditioned air having a relative humidity below 60% and a temperature in the range of 4.44°C to 54.44°C (40°F to 130°F);
(i') introducing a supply of microwaves into the chamber,
wherein the unsliced sausage log remains in the chamber for 1-12 hours, wherein the supply of conditioned air and the supply of microwaves are selected to reduce the moisture content of the unsliced sausage log to a predetermined moisture to protein ratio.

2. The method of claim 1, wherein step (a) comprises blending, grinding, and blending for a second time.

3. The method of claim 1, wherein drying the sausage log in the drying chamber is under conditions of a temperature of 12.78-18.33°C (55-65°F), 65-75% relative humidity, and 9.14 cm (0.3 feet)/second air velocity.

4. The method of claim 1, wherein the conditioned air is passed through the chamber at a volume sufficient to cause a linear air flow velocity over the sausage log to be at least 30.48 m (100 feet) per minute.

5. The method of claim 1, wherein the conditioned air is introduced into the chamber from above and below the sausage log.

6. The method of claim 1, wherein the conditioned air is supplied as a turbulent air flow.

7. The method of claim 1, wherein the conditioned air has a relative humidity of below 50-55%.

8. The method of claim 1, wherein said method further comprises cooling the sausage log after it leaves the microwave dryer.

9. The method of claim 1, wherein the microwaves are introduced in pulses.

10. The method of claim 9, wherein the pulses comprise
(a) a repeating on/off cycle of 2 to 30 seconds on, and 2 to 30 seconds off,
(b) a repeating on/off cycle of 10 seconds on and 7 seconds off, or
(c) a repeating on/off cycle of 12 seconds on and 12 seconds off.

11. The method of claim 1, wherein the microwaves are provided at 2 to 20 kilowatts.

12. The method of claim 1, wherein the conveyor with the sausage log thereon is passed through a chamber, the chamber comprising a plurality of cavities extending along the conveyor.

13. The method of claim 1, wherein the drying step in the drying chamber is conducted at ≤5% humidity.

14. The method of claim 1, wherein said method further comprises removing the outer casing after the heat treatment.

15. The method of claim 1, wherein the unsliced sausage log is 40-90 mm or 40-115 mm in diameter.

16. The method of claim 1, wherein the unsliced sausage log is 91-182 cm in length.

## Patentansprüche

1. Verfahren zur Herstellung von Hartwurst, umfassend
(a) Herstellung einer Hartwurst-Fleischmischung;
(b) Abfüllen der Mischung in eine Hülle oder eine Form oder Spritzen in Formen, um eine Wurststange zu bilden;
(c) Fermentierung der ungeschnittenen Wurststange;
(d) Hitzebehandlung der ungeschnittenen Wurststange;
gefolgt von
(e) Platzierung der Wurststange auf einem Förderband;
(f) Durchführen des Förderbands mit der ungeschnittenen Wurststange darauf durch eine Kammer;
(g) Einführen einer Zufuhr von klimatisierter Luft in die Kammer, wobei die Luft eine relative Feuchtigkeit von weniger als 60% und eine Temperatur im Bereich von 4,44°C bis 54,44°C (40°F bis 130°F) hat;
(h) Einführen von Mikrowellen in die Kammer,
wobei die Wurststange für 1 bis 12 Stunden in der Kammer bleibt wobei die Zufuhr der klimatisierten Luft und der Mikrowellen so ausgewählt sind, dass der Feuchtigkeitsgehalt der ungeschnittenen Wurststange bis zu einem vorbestimmten Verhältnis von Feuchtigkeit zu Protein reduziert wird; und
(i) Trocknen der Wurststange in einer Trockenkammer für 1-18 Tage,
wobei die Bedingungen so ausgewählt sind, dass der Feuchtigkeitsgehalt der ungeschnittenen Wurststange bis zu einem vorbestimmten Verhältnis von Feuchtigkeit zu Protein reduziert wird, oder gefolgt von
(e') Trocknen der Wurststange in einer Trockenkammer für 1-18 Tage,
wobei die Bedingungen so ausgewählt sind, dass der Feuchtigkeitsgehalt der ungeschnittenen Wurststange bis zu einem vorbestimmten Verhältnis von Feuchtigkeit zu Protein reduziert wird;
(f') Platzierung der Wurststange auf einem Förderband;
(g') Durchführen des Förderbands mit der ungeschnittenen Wurststange darauf durch eine Kammer;
(h') Einführen einer Zufuhr von klimatisierter Luft in die Kammer, wobei die Luft eine relative Feuchtigkeit von weniger als 60% und eine Temperatur im Bereich von 4,44°C bis 54,44°C (40°F bis 130°F) hat;
(i') Einführen von Mikrowellen in die Kammer,
wobei die Wurststange für 1 bis 12 Stunden in der Kammer bleibt,
wobei die Zufuhr der klimatisierten Luft und der Mikrowellen so ausgewählt sind, dass der Feuchtigkeitsgehalt der ungeschnittenen Wurststange bis zu einem vorbestimmten Verhältnis von Feuchtigkeit zu Protein reduziert wird.

2. Verfahren nach Anspruch 1, wobei Schritt (a) Mischen, Zerkleinern und ein zweites Mal Mischen umfasst.

3. Verfahren nach Anspruch 1, wobei Trocknen der Wurststange in der Trockenkammer unter den Bedingungen einer Temperatur von 12,78-18.33°C (55-65°F), einer 65-75%igen relativen Luftfeuchtigkeit und einer 9,14 cm (0,3 Fuß)/Sekunde Luftgeschwindigkeit geschieht.

4. Verfahren nach Anspruch 1, wobei die klimatisierte Luft durch die Kammer mit einem Volumen durchgeführt wird, das ausreicht, um eine lineare Luftstromgeschwindigkeit über die Wurststange von mindestens 30,48 m (100 Fuß) pro Minute zu bewirken.

5. Verfahren nach Anspruch 1, wobei die klimatisierte Luft in die Kammer über und unter der Wurststange eingeführt wird.

6. Verfahren nach Anspruch 1, wobei die klimatisierte Luft als verwirbelter Luftstrom zugeführt wird.

7. Verfahren nach Anspruch 1, wobei die klimatisierte Luft eine relative Feuchtigkeit von weniger als 50-55% hat.

8. Verfahren nach Anspruch 1, wobei das Verfahren weiterhin die Kühlung der Wurststange umfasst, nachdem diese den Mikrowellentrockner verlässt.

9. Verfahren nach Anspruch 1, wobei die Mikrowellen in Pulsen eingeführt werden.

10. Verfahren nach Anspruch 9, wobei die Pulse
(a) einen wiederkehrenden An/Aus-Zyklus von 2 bis 30 Sekunden an und 2 bis 30 Sekunden aus,
(b) einen wiederkehrenden An/Aus-Zyklus von 10 Sekunden an und 7 Sekunden aus, oder
(c) einen wiederkehrenden An/Aus-Zyklus von 12 Sekunden an und 12 Sekunden aus
umfassen.

11. Verfahren nach Anspruch 1, wobei die Mikrowellen mit 2 bis 20 Kilowatt bereitgestellt werden.

12. Verfahren nach Anspruch 1, wobei das Förderband mit der ungeschnittenen Wurststange darauf durch eine Kammer geführt wird, wobei die Kammer eine Vielzahl von Vertiefungen umfasst, die sich entlang des Förderbands erstrecken.

13. Verfahren nach Anspruch 1, wobei der Trockenschritt in der Trockenkammer bei einer Feuchtigkeit von ≤5% durchgeführt wird.

14. Verfahren nach Anspruch 1, wobei das Verfahren weiterhin die Entfernung der äußeren Hülle nach der Hitzebehandlung umfasst.

15. Verfahren nach Anspruch 1, wobei die ungeschnittene Wurststange einen Durchmesser von 40-90 mm oder 40-115 mm hat.

16. Verfahren nach Anspruch 1, wobei die ungeschnittene Wurststange eine Länge von 91-182 cm hat.

## Revendications

1. Procédé pour préparer une saucisse sèche comprenant:
(a) la préparation d'un mélange de viande pour saucisse sèche;
(b) le remplissage d'un boîtier ou d'un moule avec le mélange, ou l'extrusion du mélange dans des moules, pour former un boudin de saucisse;
(c) la fermentation du boudin de saucisse non tranché;
(d) le traitement à la chaleur du boudin de saucisse non tranché;
suivi par
(e) le placement du boudin de saucisse sur un convoyeur;
(f) le passage du convoyeur, avec le boudin de saucisse non tranché sur celui-ci, à travers une chambre;
(g) l'introduction dans la chambre d'un apport d'air conditionné ayant une humidité relative inférieure à 60 % et une température située dans la plage allant de 4,44 °C à 54,44 °C (40°F à 130°F) ;
(h) l'introduction d'un apport de micro-ondes dans la chambre,
dans laquelle le boudin de saucisse reste dans la chambre pendant 1 à 12 heures,
dans laquelle l'apport en air conditionné et l'apport en micro-ondes sont choisis de manière à réduire la teneur en humidité du boudin de saucisse non tranché jusqu'à un rapport humidité/protéine prédéterminé; et
(i) le séchage du boudin de saucisse dans une chambre de séchage pendant 1 à 18 jours,
dans lequel les conditions sont choisies de manière à réduire la teneur en humidité du boudin de saucisse non tranché jusqu'à un rapport humidité/protéine prédéterminé, ou suivi par
(e') le séchage du boudin de saucisse dans une chambre de séchage pendant 1 à 18 jours,
dans lequel les conditions sont choisies de manière à réduire la teneur en humidité du boudin de saucisse non tranché jusqu'à un rapport humidité/protéine prédéterminé,
(f') le placement du boudin de saucisse non tranché sur un convoyeur;
(g') le passage du convoyeur, avec le boudin de saucisse non tranché sur celui-ci, à travers une chambre;
(h') l'introduction dans la chambre d'un apport d'air conditionné ayant une humidité relative inférieure à 60 % et une température située dans la plage allant de 4,44 °C à 54,44 °C (40°F à 130°F);
(i') l'introduction d'un apport de micro-ondes dans la chambre,
dans laquelle le boudin de saucisse reste dans la chambre pendant 1 à 12 heures,
dans laquelle l'apport en air conditionné et l'apport en micro-ondes sont choisis de manière à réduire la teneur en humidité du boudin de saucisse non tranché jusqu'à un rapport humidité/protéine prédéterminé.

2. Procédé selon la revendication 1, dans lequel l'étape (a) comprend un mélangeage, un broyage et un mélangeage une deuxième fois.

3. Procédé selon la revendication 1, dans lequel le séchage du boudin de saucisse dans la chambre de séchage a lieu dans des conditions de température de 12,78 à 18,33 °C (55 à 65°F), d'humidité relative de 65 à 75 %, et de vitesse d'air de 9,14 cm (0,3 pied) par seconde.

4. Procédé selon la revendication 1, dans lequel l'air conditionné passe à travers la chambre en un volume suffisant pour provoquer une vitesse de courant d'air linéaire sur le boudin de saucisse d'au moins 30,48 m (100 pieds) par minute.

5. Procédé selon la revendication 1, dans lequel l'air conditionné est introduit dans la chambre depuis le dessus et le dessous du boudin de saucisse.

6. Procédé selon la revendication 1, dans lequel l'air conditionné est délivré sous la forme d'un courant d'air turbulent.

7. Procédé selon la revendication 1, dans lequel l'air conditionné a une humidité relative inférieure à 50 à 55 %.

8. Procédé selon la revendication 1, lequel procédé comprend en outre le refroidissement du boudin de saucisse après qu'il a quitté le séchoir à micro-ondes.

9. Procédé selon la revendication 1, dans lequel les micro-ondes sont introduites par impulsions.

10. Procédé selon la revendication 9, dans lequel les impulsions comprennent
(a) un cycle de marche/arrêt répété de 2 à 30 secondes de marche et 2 à 30 secondes d'arrêt,
(b) un cycle de marche/arrêt répété de 10 secondes de marche et 7 secondes d'arrêt, ou
(c) un cycle de marche/arrêt répété de 12 secondes de marche et 12 secondes d'arrêt.

11. Procédé selon la revendication 1, dans lequel les micro-ondes sont délivrées à 2 à 20 kilowatts.

12. Procédé selon la revendication 1, dans lequel le convoyeur avec le boudin de saucisse sur celui-ci passe à travers une chambre, la chambre comprenant une pluralité de cavités s'étendant le long du convoyeur.

13. Procédé selon la revendication 1, dans lequel l'étape de séchage dans la chambre de séchage est effectuée sous une humidité ≤ 5 %.

14. Procédé selon la revendication 1, lequel procédé comprend en outre le retrait du boîtier après le traitement à la chaleur.

15. Procédé selon la revendication 1, dans lequel le boudin de saucisse non tranché a un diamètre de 40 à 90 mm ou de 40 à 115 mm.

16. Procédé selon la revendication 1, dans lequel le boudin de saucisse non tranché a une longueur de 91 à 182 cm.
